# EUROPÄISCHE PATENTSCHRIFT

(11) **EP 1 971 820 B1**
(45) Veröffentlichungstag und Bekanntmachung des Hinweises auf die Patenterteilung: **17.10.2012**
(21) Anmeldenummer: 06818370.6
(22) Anmeldetag: 03.11.2006
(51) Int. Cl.: G06T 7/00, G01C 11/06, G01B 11/25

(54) **ERSTELLUNG EINES ABSTANDSBILDES**
CREATION OF A DISTANCE IMAGE
ETABLISSEMENT D'UNE IMAGE DE DISTANCE

(30) Priorität: 08.01.2006 DE 102006001170; 11.01.2006 DE 102006001634
(43) Veröffentlichungstag der Anmeldung: 24.09.2008
(73) Patentinhaber: Tropf, Hermann, 68789 St. Leon-Rot (DE)
(72) Erfinder: Tropf, Hermann, 68789 St. Leon-Rot (DE)
(74) Vertreter: Jany und Petersen
(86) Internationale Anmeldenummer: PCT/EP2006/010577
(87) Internationale Veröffentlichungsnummer: WO 2007/079805

(56) Entgegenhaltungen:
- WO-A2-2005/010825

## Beschreibung

Die Erfindung betrifft ein Verfahren und eine Vorrichtung zum Gewinnen eines Abstandsbildes. Abstandsbilder codieren im Gegensatz zu konventionellen Bildern, die Grauwerte oder Farben codieren, die Entfernung von Objektpunkten vom Sensor (im Allgemeinen einer Kamera) oder die Höhe der Objektpunkte relativ zu einer Ebene. Die Bildpunkte eines Abstandsbildes enthalten also eine Entfernungsinformation (z.B. Abstand oder Höhe) des jeweils zugehörigen abgebildeten Objektpunktes. Technische Anwendungen finden sich u.a. in Montagekontrolle, Robotik, Messtechnik, Archäologie, Bekleidungsindustrie, Biometrie, Medizin und Reverse Engineering.

Eine Übersicht über eingesetzte Verfahren mit einer Tabelle kommerziell erhältlicher Systeme ist zu finden in der Literaturstelle Review of 20 years of range sensor development, Journal of Electronic Imaging, 13 (1): 231-240, Jan. 2004, National Research Council Canada. Ergänzend zu den Verfahren siehe auch Paul J. Besl, Active Optical Range Imaging Sensors, Machine Vision and Applications (1988) 1:127-152.

Das in der vorliegenden Anmeldung beschriebene Verfahren betrifft die Triangulation mit Stereo-Kameras zur berührungslosen Gewinnung eines Abstandsbildes. Herkömmliche Stereo-Systeme benutzen zwei oder mehr Videokameras, die starr miteinander verbunden sind und die gleiche Szene beobachten. Bei Stereo-Verfahren ist das schwierigste Problem die Herstellung der Korrespondenz der Bildpunkte, d.h. die Zuordnung der Bildpunkte der einen Kamera zu denen der Bildpunkte der anderen Kamera. Ist die Korrespondenz bekannt, so kann nach bekannten mathematischen Methoden (siehe z.B. Yi Ma, Stefano Soatto, Jana Kosecka, S. Shankar Sastry: An Invitation to 3D, Springer Verlag 2004) ein entsprechendes Abstandsbild berechnet werden.

Zum Herstellen der Korrespondenz werden klassisch Bildanalysemethoden auf Basis der Extraktion konturhafter oder blob-artiger Merkmale eingesetzt; eine gefundene Zuordnung ist jedoch wegen möglicher Probleme bei der Merkmalsextraktion nicht wirklich sicher, außerdem muss zwischen den Merkmalen geschätzt oder interpoliert werden. Um diese Probleme zu umgehen, verwendet man zusätzlich strukturiertes Licht.

Bei regelmäßig sich wiederholenden Lichtstrukturen wie z.B. den verbreiteten Streifenmustern, treten Mehrdeutigkeiten auf, die mit dem codierten Lichtansatz beseitigt werden können. Üblicherweise wird dabei mit einer einzelnen Kamera gearbeitet, wobei die Geometrie der Lichtquelle selbst zur Triangulation herangezogen wird. Eine Übersicht über bekannte Techniken gibt die Literaturstelle J. Batle, E. Mouaddib, J. Salvi: Recent Progress in Coded Structured Light as a Technique to Solve the Correspondence Problem - A Survey. Pattern Recognition, Vol. 31, No. 7, p. 963-982, 1998.

Die Publikation WO 2005/010825 A2 offenbart ein Verfahren zum Erstellen eines Abstandsbildes, bei dem eine erste Beleuchtung der Szene ("object") mit einem Zufallsmuster ("random grid") und eine zweite Beleuchtung mit einem so genannten "striped grid" durchgeführt wird. Dabei werden ein erstes und ein zweites Bild mit jeweils zwei Kameras aufgenommen. In einem ersten Schritt nach der Aufnahme der ersten Bilder mit beiden Kameras wird die Korrespondenz zwischen Koordinaten der beiden ersten Bilder bestimmt. Nach der Aufnahme der zweiten Bilder wird die im ersten Schritt ermittelte Korrespondenz dazu genutzt, Musterstreifen zwischen den beiden zweiten Aufnahmen der Szene zu identifizieren. Schließlich werden beispielsweise mittels Triangulation die 3D-Koordinaten der Szene ermittelt. Helligkeitsverhältnisse aus dem ersten und zweiten Bild für beide Kameras werden nicht berechnet und es wird keine Korrespondenz von Pixeln aufgrund eines Vergleichs der Helligkeitsverhältnisse durchgeführt.

In J. Salvi, J. Pages, J. Batle, Pattern codification strategies in structured light system, Pattern Recognition 37, 2004, Seiten 827-849 wurde vorgeschlagen, mit einer Kamera mehrere Bilder einer Szene mit jeweils unterschiedlichen Beleuchtungsmustern aufzunehmen und anschließend für jedes Bild jeweils das Helligkeitsverhältnis ("intensity ratio") relativ zu einer konstanten Beleuchtung zu berechnen. Es werden jedoch keine Zufalls- oder Pseudozufallsmuster benutzt und es findet sich auch kein Hinweis auf den Vergleich von Helligkeitsverhältnissen der von zwei Kameras aufgenommenen Bilder.

Nach US 6 542 250 B1 werden mindestens zwei Muster verwendet, die Zufallsmuster sein können. In einem iterativen Vorgang wird, ausgehend von einer initialen Schätzung, punktweise eine Vorwärtsrechnung von Raumkoordinaten zu Bildkoordinaten von zwei Kameras realisiert, mit Verfeinerung bei jedem Iterationsschritt.

Es ist auch bekannt, mit einzelnen texturierten Beleuchtungsmustern und texturelementeweiser Korrespondenzbestimmung zu arbeiten, z.B. mit den Systemen der Firmen 3Q / 3DMD (siehe http://www.3dmd.com/AboutUs/Technology.asp). Dies hat den Nachteil, dass sich die Texturelemente aus verschiedenen Blickrichtungen unterschiedlich darstellen können (Glanz, Schattierung, Form) und daher schwierig auszuwerten sind und somit unsichere Ergebnisse liefern können. Die Verfahren werden daher nur auf nicht zu stark strukturierten Oberflächen mit breiter Reflexionskeule verwendet (matte Oberflächen). Nach D. Viejo, J.M.Sa'z, M.A. Cazorla, F. Escolano: Active Stereo Based Compact Mapping. Proc. of the IEEE/RSJ Intern. Conf. on Intell. Robots and Systems. Canada, August 2005 wird das Problem durch eine speziell gewählte Form der Merkmale entschärft, nämlich durch Linienelemente mit sich zufällig verändernder Intensität und Orientierung; es dürfen nur Elemente mit zueinander passender Orientierung und Intensität miteinander gepaart werden. Nachteilig dabei ist, a) dass die Intensität aus verschiedenen Richtungen betrachtet unterschiedlich ist und b) dass diese Elemente für eine zuverlässige Auswertung eine gewisse Ausdehnung haben müssen, weshalb eine pixelweise Korrespondenzbildung wieder eine Interpolation zwischen den Merkmalen erfordert.

Nach J. Batle, E. Mouaddib, J. Salvi: Recent Progress in Coded Structured Light as a Technique to Solve the Correspondence Problem. A Survey. Pattern Recognition, Vol. 31, No. 7, p. 963-982, 1998, Absatz 5.1 werden mit einer Kamera mehrere Bilder einer Szene mit jeweils unterschiedlichen Beleuchtungsmustern aufgenommen und anschließend wird für jedes Bild jeweils das Helligkeitsverhältnis ("intensity ratio") relativ zu einer konstanten Beleuchtung berechnet ("codification based on grey levels").

Eine Sonderform des codierten Lichts ist die Codierung durch ein kontinuierlich über das Blickfeld verlaufendes Farbmuster ("Regenbogen"), mit einer einzelnen Kamera, nach JP 61075210 oder US 5675407. Ein Problem dabei ist der hohe Preis für den Projektor, der z.B. über ein "linear variable wavelength filter" realisiert wird.

Nach US 6028672 erfolgt bei kontinuierlich verlaufendem Farbmuster die Triangulation nicht zwischen Kamera und Projektor, sondern zwischen zwei Kameras, bei Farbvergleich auf epipolaren Linien der beiden Kameras. Das entschärft zwar die Forderung nach geometrisch präziser Farb-Projektion, denn so können beliebige Farbmuster verwendet werden, es verbleiben jedoch noch grundsätzliche Probleme mit der Farbauswertung.

Diese sollen nach US 6556706 durch diverse Maßnahmen verringert werden, u.a. dadurch, dass die Lichtprojektion scheibenweise nur Licht einer Wellenlänge enthält (siehe z.B. Spalte 5, Zeile 35 "... impose a single spectral light condition to the projector").

Vom gleichen Anmelder wurden auch Anordnungen mit sich drehendem Laser-Lichtschlitz vorgeschlagen (siehe US 6600168), mit einer Kamera, wobei sich die Lichtintensität winkelabhängig verändert, bei einer Bildaufnahme steigend und bei einer Bildaufnahme fallend (im Folgenden gegenläufig genannt). Über das Intensitätsverhältnis eines Pixels aus den Aufnahmen kann eine eindeutige Zuordnung zum zugehörigen Projektionswinkel getroffen werden. Nachteilig sind die mechanische Bewegung und die erforderliche Präzision bei der Projektion.

Eine statische Anordnung zum Erzeugen von über das Blickfeld gegenläufigen Beleuchtungsmustern, mit einer Kamera, wird in US 6897946 beschrieben, erzeugt durch zwei nah benachbarte, geringfügig gegeneinander gedrehte Lampen mit Reflektoren.

Eine weitere Vorrichtung zum Erzeugen von über das Blickfeld gegenläufigen Beleuchtungsmustern wird in US 6618123 beschrieben, mit einem Feld von LEDs, die so angesteuert werden, dass über das Blickfeld hinweg gegenläufige Beleuchtungsmuster entstehen. Die Vorrichtung arbeitet mit einer einzelnen Kamera und benötigt homogene Lichtkeulen und eine aufwendige Kalibrierung mit einer ebenen Platte.

Ein allgemeiner Nachteil von Verfahren mit über das Blickfeld kontinuierlich, gegenläufigen Beleuchtungsmustern besteht darin, dass sich bei ebener Vorlage die Helligkeitswerte benachbarter Pixel nur wenig unterscheiden und die genaue lokale Zuordnung dadurch schwierig wird.

Um dennoch eine gute Zuordnung (und damit eine gute Abstandsmessung) zu erreichen, müssen genaue und hochauflösende Wandler eingesetzt werden. Um die Beleuchtungsdynamik mit niedrigen Helligkeitswerten gut auszunutzen und auch dunkle Oberflächenpartien gut auswerten zu können, muss bei der Verhältnisrechnung durch kleine Zahlen dividiert werden; es müssen also auch bei kleinen Zahlen genügendsignifikante Bits zur Verfügung stehen. Bei der Verwendung von zwei Kameras müssen diese genau aufeinander abgestimmt sein.

Der Erfindung liegt unter Berücksichtigung dieses Standes der Technik die Aufgabe zugrunde, eine Verfahren und eine Vorrichtung bereitzustellen, die die oben genannten Nachteile vermeiden.

Die Aufgabe wird erfindungsgemäß gelöst durch Verfahren und Vorrichtungen mit den Merkmalen der beigefügten unabhängigen Patentansprüche. Bevorzugte Ausgestaltungen und Weiterbildungen der Erfindung ergeben sich aus den abhängigen Patentansprüchen und der nachfolgenden Beschreibung mit zugehörigen Zeichnungen.

Ein erfindungsgemäßes Verfahren zum Erstellen eines Abstandsbildes einer Szene aus der Korrespondenz von Pixeln der Bilder einer ersten Kamera und mindestens einer zweiten Kamera, die die Szene in Stereo-Anordnung aufnehmen, weist vorteilhafterweise die weitere Besonderheit auf, dass
- die Szene bei einer zweiten Beleuchtung beleuchtet wird, wobei ein zweites Bild mit der zweiten Beleuchtung von den mindestens zwei Kameras aufgenommen wird,
- für mindestens zwei Kameras aus dem ersten und dem zweiten von der jeweiligen Kamera aufgenommenen Bild pixelweise ein Verhältnis berechnet wird, bei dem ein in dem Pixel aufgenommener Wert des Modulationsmerkmals aus dem einen Bild in den Zähler und das Modulationsmerkmal aus dem anderen Bild in den Nenner des Verhältniswertes gesetzt wird, und
- die Korrespondenz von Pixeln der Szene auf Basis eines Vergleichs der Modulationsmerkmal-Verhältnisse von Pixeln verschiedener Kameras bestimmt wird.

Eine erfindungsgemäße Vorrichtung zum Erstellen eines Abstandsbildes einer Szene, umfassend mindestens zwei Kameras in Stereo-Anordnung, mindestens eine Bildauswerteeinheit zum Auswerten der Kamerabilder und mindestens eine Projektionseinheit zum Beleuchten der Szene, weist die vorteilhafterweise die weitere Besonderheit auf, dass
- mittels der Projektionseinheit mindestens zwei verschiedene Beleuchtungen auf die Szene projizierbar sind, von denen mindestens eine Beleuchtung ein Zufalls- oder Pseudozufallsmuster ist, das hinsichtlich wenigstens eines Modulationsmerkmals in zumindest einer räumlichen Dimension als Zufallsfolge bzw. Pseudozufallsfolge ausgebildet ist,
- die Szene bei einer zweiten Beleuchtung beleuchtbar ist, wobei ein zweites Bild mit der zweiten Beleuchtung von den mindestens zwei Kameras aufnehmbar ist,
- mit der Bildauswerteeinheit für mindestens zwei Kameras aus dem ersten und dem zweiten von der jeweiligen Kamera aufgenommenen Bild pixelweise ein Verhältnis berechenbar ist, bei dem ein in dem Pixel aufgenommener Wert des Modulationsmerkmals aus dem einen Bild in den Zähler und das Modulationsmerkmal aus dem anderen Bild in den Nenner des Verhältniswertes gesetzt wird, und
- die Korrespondenz von Pixeln der Szene auf Basis eines Vergleichs der Modulationsmerkmal-Verhältnisse von Pixeln verschiedener Kameras bestimmbar ist.

Zufalls- oder Pseudozufallsmuster werden im Folgenden auch kurz Zufallsmuster genannt. Unter Pseudozufallsmuster werden hier auch determinierte Muster (Quasi-Zufallsmuster) subsumiert, die innerhalb eines gewissen lokalen Bereichs keine Wiederholungen aufweisen, über eine Mindestlänge gesehen.

Zufallsmuster basieren auf einer Zufallsfolge, wie im nächsten Absatz beschrieben wird. Pseudozufallsmuster basieren entweder auf einer Pseudozufallsfolge, wie übernächsten Absatz beschrieben wird, oder auf einer Folge mit speziellen Eigenschaften, Quasizufallsfolge genannt, die daran anschließend beschrieben wird.

Zufallsmuster und Pseudozufallsmuster liegen in einem Raster vor, das vorzugsweise etwas gröber ist als das Pixelraster (soviel gröber wie erforderlich, um Aliasing-Effekte zu vermeiden), im Folgenden einfach Raster genannt.

Eine Zufallssequenz oder Zufallsfolge entsteht durch die wiederholte Anwendung eines statistischen Experiments. Eine Zufallssequenz ist im Allgemeinen eine Abfolge von Realisationen einer Zufallsvariable. Der Begriff wird meistens im Sinne einer Abfolge von zufällig aus einem bestimmten Alphabet oder Zahlenvorrat ausgewählten Zeichen gebraucht. Eine echte Zufallssequenz kann näherungsweise ausgedrückt durch eine verschwindende serielle Korrelation oder auch Autokorrelation gekennzeichnet sein, d.h. der Korrelationskoeffizient zwischen aufeinander folgenden Werten in der Sequenz ist nicht signifikant von Null verschieden.

Als Pseudozufallsfolge bezeichnet man Folgen, beispielsweise Zahlenfolgen, die zwar zufällig aussehen, zumindest für hinreichend kurze Sequenzen, es aber nicht wirklich sind. Eine Pseudozufallsfolge "sieht zufällig aus", wird aber durch einen deterministischen Algorithmus (z.B. Pseudozufallszahlengenerator) berechnet oder erzeugt. Die Zufälligkeit wird durch statistische Eigenschaften der Zahlenfolge bestimmt, wie Gleichwahrscheinlichkeit der einzelnen Zahlen und statistische Unabhängigkeit verschiedener Zahlen der Folge. Beispielsweise wird mittels eines Pseudozufallszahlengenerators eine Folge von Pseudozufallszahlen mittels deterministischer Algorithmen ausgehend von einem echt zufällig gewählten Startwert berechnet.

Zur Erläuterung einer Pseudozufallsfolge dient das folgende numerische Beispiel:
0.010211330200221320010211330200221320010211...

Die dargestellte Zahlenfolge mit Werten 0,1,2,3 (generiert mit einem digitalen Pseudozufallsgenerator) wiederholt sich ab der Mindestlänge von 18 Werten (markiert durch Unterstreichung), darin kommen jedoch keine Wiederholungen von lokalen Bereichen der Länge 3 (oder mehr) vor.

Eine Quasizufallsfolge ist eine speziell für die Belange dieser Erfindung konstruierte Folge von Werten, die im Rahmen dieser Erläuterung als Zahlenwerte bezeichnet werden. Ziel der konstruierten Quasizufallsfolge ist es, die Korrespondenzfindung zu vereinfachen und möglichst sicher zu machen.

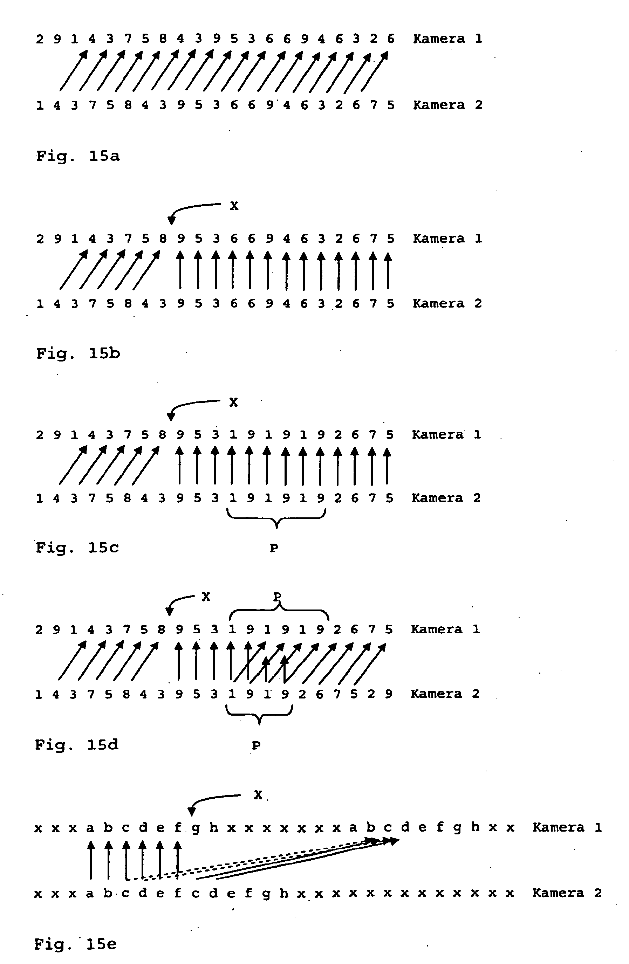

Eine Quasizufallsfolge darf periodisch sein, die Periodenlänge muss dabei jedoch mindestens so groß sein, wie es unter Berücksichtigung der Abbildungsverhältnisse der maximal möglichen Disparität korrespondierender Punkte auf Linien, vorzugsweise auf epipolaren Linien entspricht. Eine solche Periode wird im Folgenden als Grob-Periode bezeichnet. Zusätzlich müssen aufeinander folgende Werte gewissen Bedingungen genügen, die im Folgenden erläutert und anhand der Fig. 15 veranschaulicht werden. Quasizufallsfolgen kann man nach den beschriebenen Regeln mittels Computerprogramm entwerfen.

Zur Veranschaulichung durch Beispiele werden im folgenden Zahlenwerte 1 bis 9 verwendet (1 für kleinen Zahlenwert, 9 für großen Zahlenwert). Die Folgen von Zahlenwerten sind z.B. als Grauwerte entlang epipolarer Linien zu interpretieren, in einem Raster. Die Zahlenwerte können auch abstrakt mit a,b,c,... bezeichnet werden, wo dies für die Darstellung günstiger ist, z.B. mit acbcab für 124214.

Die Fig. 15a zeigt ein Beispiel mit konstanter Disparität von zwei Rastereinheiten entlang der epipolaren Linien, z.B. die Zahlenwerte gemäß Fig. 15a, wobei die Pfeile jeweils korrespondierende Punkte angeben. Der dazugehörige Höhenverlauf entspricht (bei parallel ausgerichteten Kameras) einer konstanten Höhe. Bei Disparitätssprüngen treten dementsprechend im Höhenverlauf Sprünge auf. In Fig. 15b ist ein solcher Disparitätssprung an der mit "X" gekennzeichneten Stelle gegeben.

Im dargestellten Beispiel sind die einzelnen Werte der beiden Kameras exakt gleich; die Korrespondenzen (Pfeile) sind eindeutig festlegbar. Dies ist auch der Fall, wenn die Werte nicht ganz genau gleich sind, sondern nur nahezu gleich; zur Vereinfachung der Darstellung wird im folgenden von exakt gleichen Werten ausgegangen.

Es kann zwar situationsabhängig durchaus unschädlich sein, wenn die Folge von Zahlenwerten innerhalb der Grobperiode weitere kleinere Periodizitäten aufweist, wie im Beispiel der Fig. 15c gezeigt; trotz des periodischen Bereichs P ist die Zuordnung eindeutig, da der periodische Bereich beidseitig durch eine periodenfreie Folge eingerahmt ist und der periodische Bereich P bei beiden Kameras gleich lang ist. Findet jedoch innerhalb des periodischen Bereichs P ein Disparitätssprung statt, so wird die Zuordnung mehrdeutig, siehe Fig. 15d.

Eine ähnliche Situation liegt in dem Beispiel gemäß Fig. 15e vor. Die Teilfolge "abcdef" wiederholt sich nach 15 Schritten (Kamera 1). In der unteren Folge (Kamera 2) wurden an der mit "X" gekennzeichneten Stelle elf Werte herausgenommen. Die Zuordnung ist hier stark mehrdeutig.

Man sollte also Wiederholungen möglichst vermeiden. Dies hat jedoch natürliche Grenzen, speziell für kürzere Wertefolgen: Bei vier Quantisierungsstufen, beispielsweise mit den vier möglichen Grauwerten 1, 2, 3, 4, gibt es nur 4x4 mögliche Teilfolgen der Länge L=2; sind diese erschöpft, so müssen danach grundsätzlich Wiederholungen von Teilfolgen dieser Länge auftreten. Es gibt 4x4x4 mögliche Teilfolgen der Länge 3, etc. Mit zunehmender Teilfolgenlänge L kann man also strengere Forderungen stellen.

Eine Quasizufallsfolge ist nun eine Folge von Zahlenwerten, die innerhalb der Grobperiode exakt oder näherungsweise Wiederholungen von Teilfolgen so weit vermeidet, wie es im Rahmen einer durch das Gesamtsystem vorgegebenen sinnvollen Quantisierung möglich ist.

Eine Quasizufallsfolge hat in der Regel, obwohl systematisch konstruiert, auf den ersten Blick ein zufälliges Aussehen. "Näherungsweise" würde z.B. zutreffen, wenn man in Fig. 15d "1 9 1 9 1 9" ersetzen würde durch "1 9 1 8 2 9", wobei sich solch kleine Schwankungen in ihrer Amplitude etwas über dem Systemrauschen (einschl. Kamera) befinden.

Außerdem ist anzustreben, dass sich auch zwei direkt benachbarte Werte möglichst gut unterscheiden; aufeinander folgend gleiche Werte entsprechen formell einer Teilfolge der Länge 1 in der Quasizufallsfolge.

Unter einem Zufallsmuster bzw. Pseudozufallsmuster wird im Rahmen der vorliegenden Anmeldung eine zweidimensionale Struktur verstanden, die mindestens ein Modulationsmerkmal, z.B. Intensität/Helligkeit, Farbe bzw. ein Farbparameter wie Farbintensität oder Farbsättigung, Polarisation, Phase, Frequenz etc., aufweist, das in dem Muster in zumindest einer räumlichen Dimension als Zufallsfolge bzw. Pseudozufallsfolge ausgebildet ist, d.h. hinsichtlich dieses Modulationsmerkmals in Form einer Zufallsfolge bzw. Pseudozufallsfolge in zumindest einer räumlichen Dimension lokal moduliert ist. Eine bevorzugte Ausführungsform kann darin bestehen, dass das Zufalls- bzw. Pseudozufallsmuster im Wesentlichen in einer ersten räumlichen Dimension lokal moduliert und in der zweiten räumlichen Dimension im Wesentlichen nicht oder nur wenig moduliert ist. Wenn das Muster in der zweiten räumlichen Dimension nicht oder nur wenig moduliert ist handelt es sich um ein Streifenmuster bzw. um ein Muster mit einer streifenähnlichen Struktur.

Bei bevorzugten Ausführungsformen eines Zufallsmusters bzw. Pseudozufallsmusters ist das Modulationsmerkmal die Helligkeit bzw. Intensität der Beleuchtung und das Modulationsmerkmal-Verhältnis ein Helligkeits- bzw. Intensitätsverhältnis, oder das Modulationsmerkmal ist ein Farbparameter der Beleuchtung und das Modulationsmerkmal-Verhältnis ein Farbwert-Verhältnis. Grundsätzlich kann die Zufalls- bzw. Pseudozufallsfolge auch eine binäre Folge, d.h. eine Folge mit zwei Zuständen des modulierten Merkmals, vorzugsweise eine Folge von Hell-Dunkel-Werten sein. Im Folgenden wird ohne Beschränkung der Allgemeinheit die Erfindung anhand eines Intensitäts- bzw. Helligkeits-Musters (Grauwerte oder hell/dunkel) beispielhaft erläutert.

Das Muster kann beliebig flächig ausgebildet sein. Ein streifenförmiges Muster ist bevorzugt, d.h. ein Muster mit einer Streifenstruktur. Vorzugsweise sind die Streifen in dem von den Kameras aufgenommenen Bild im Wesentlichen quer oder schräg zu den epipolaren Linien orientiert, so dass das Muster im Wesentlichen entlang der epipolaren Linien moduliert ist und quer bzw. schräg dazu nicht oder nur wenig moduliert ist.

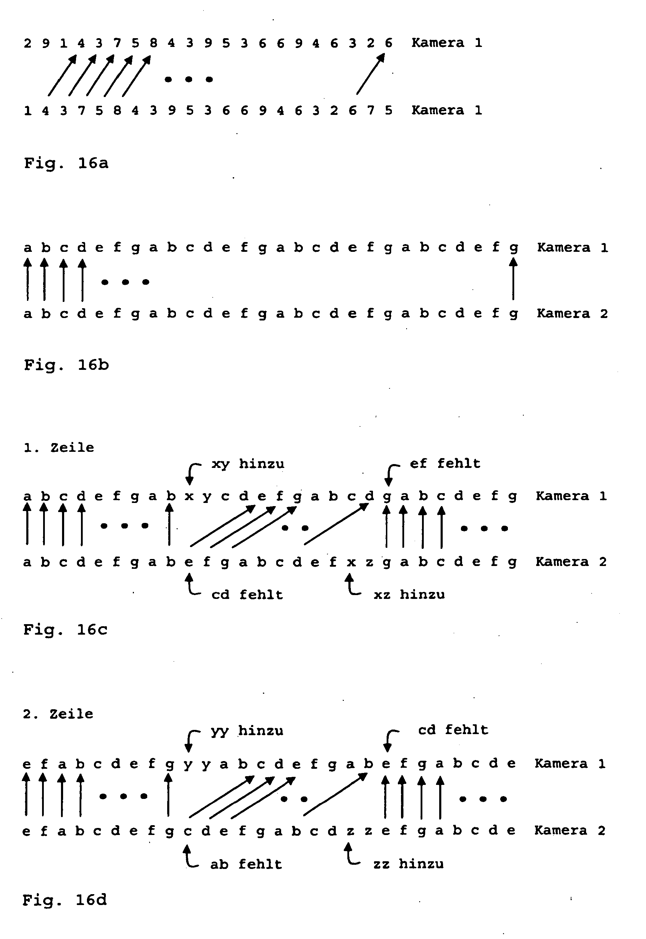

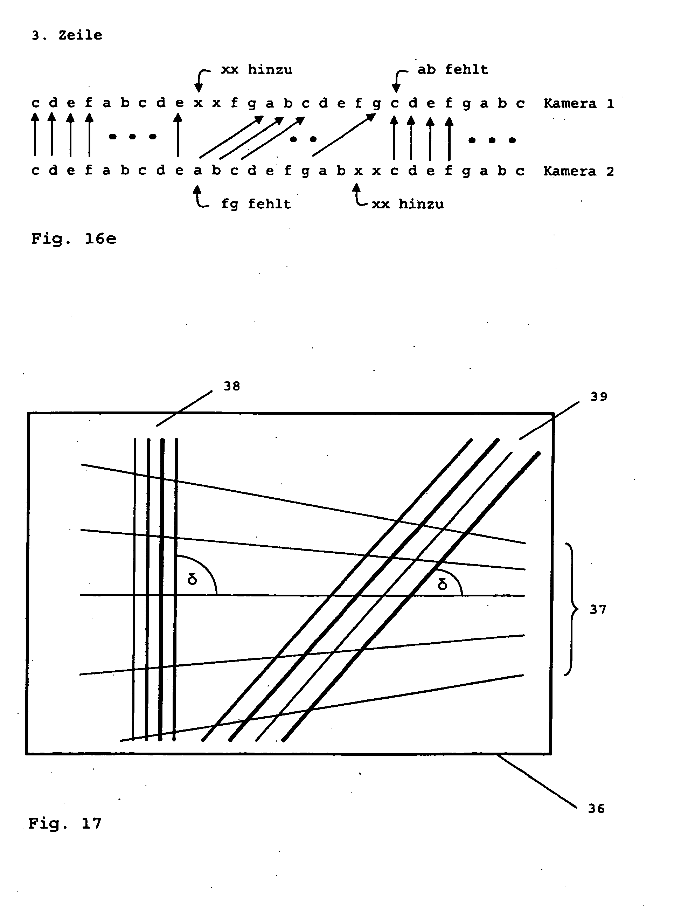

Der besondere Vorteil der schrägen Projektionsstreifen wird anhand der Fig. 16 erläutert. Die Fig. 16a zeigt wiederum die Situation von Fig. 15a mit konstanter Parität. Die Fig. 16b zeigt Folgen von Zahlenwerten bei Disparität 0, zur besseren Lesbarkeit mit Buchstaben a bis g dargestellt; die Periode der Folge ist 7, wobei z.B. a=1, b=4, c=3 etc. gelten kann.

Die 16c zeigt dieselbe Folge, jedoch mit zwei Disparitätssprüngen um +4 bzw. -4 Raster; an den Sprungstellen werden Zahlenwerte c,d/e,f herausgenommen bzw. Zahlenwerte xy/xz eingefügt. An diesen Stellen seien im Höhenverlauf des Objekts steile Sprünge; die herausgenommenen Werte entsprechen Stellen, die von der betreffenden Kamera nicht eingesehen werden können ("Abschattung"), die eingefügten Werte entsprechen Helligkeiten, die an den Flanken des Höhenverlaufes für die betreffende Kamera sichtbar sind. Dieser Verlauf gelte nun für eine erste epipolare Linie, hier kurz 1. Zeile genannt.

Eine benachbarte, d.h. nicht zu weit entfernte epipolare Linie, hier 2. Zeile genannt, ist in Fig. 16d gezeigt, und zwar für schräge Projektionsstreifen. Durch die schrägen Projektionsstreifen ergibt sich ein Versatz des kompletten Musters, im Beispiel um zwei Raster nach rechts. Die Position der Disparitätssprünge bleibt jedoch zumindest näherungsweise erhalten.

Bei der in Fig. 16e gezeigten, dritten Zeile ergibt sich ein Versatz um weitere zwei Raster, wiederum unter Beibehaltung der Position der Paritätssprünge.

Aus diesem Beispiel wird der besondere Vorteil der schrägen Projektionsstreifen ersichtlich: Die gleiche Paritäts-Sprunginformation (und damit Höhensprung-Information zu einem Objektpunkt), d.h. die gleichen Bezugspfeile, wird aus der Zuordnung unterschiedlicher Zahlenwerte abgeleitet, die von benachbarten oder sich in der Nähe befindenden epipolaren Linien stammen. Beispielsweise wird aus der Zuordnung e-e in Fig. 16c die entsprechende Zuordnung c-c in Fig. 16d. Durch das Einbeziehen von Zuordnungen von zueinander unterschiedlichen Werten, die zu nahezu demselben Objektpunkt gehören, aber aus verschiedenen epipolaren Linien stammen, die benachbart oder nah zueinander angeordnet sind, in die Auswertung der Bildinformation zum Erstellen des Abstandsbildes wird die Auswertung wesentlich stabiler.

Diese Einbeziehung wird durch schräg zu den epipolaren Linien verlaufende Projektionsstreifen ermöglicht. Bei nicht schrägem, sondern senkrechtem Verlauf der Projektionsstreifen zu den epipolaren Linien würden dagegen in der Fig. 16d dieselben Zahlenwerte wie in Fig. 16c resultieren (d.h. die Zuordnung e-e in Fig. 16c bliebe eine Zuordnung e-e in Fig. 16d), so dass keine in der Auswertung berücksichtigbare redundante Information oder Zusatzinformation gewonnen wird.

Natürlich wird die Position der Paritätssprünge nicht über alle Zeilen gleich bleiben, doch grobe Änderungen der Paritätssprungpositionen von Zeile zu Zeile werden nur gelegentlich auftauchen. Erfindungsgemäß werden daher lokale Auswertungen mit denen von Vorgängerzeilen einerseits und Nachfolgerzeilen andererseits zusammengefasst betrachtet und das Ergebnis derjenigen Nachbarn mit dem plausibleren Ergebnis gewählt, vorzugsweise gemittelt.

Der Vorteil der erfindungsgemäß schrägen Anordnung der Projektionsstreifen relativ zu den epipolaren Linien ist auch ohne die oben beschriebene Verhältnisbildung gegebenen, auch wenn nur eine Beleuchtung durchgeführt wird. Ein allgemeines erfindungsgemäßes Verfahren zum Erstellen eines Abstandsbildes einer Szene aus der Korrespondenz von Pixeln der Bilder einer ersten Kamera und mindestens einer zweiten Kamera, die die Szene in Stereo-Anordnung aufnehmen, weist also die Merkmale auf, dass
- die Szene bei einer ersten Beleuchtung mit einem Zufalls- oder Pseudozufallsmuster beleuchtet wird, das hinsichtlich wenigstens eines Modulationsmerkmals in zumindest einer räumlichen Dimension als Zufallsfolge bzw. Pseudozufallsfolge ausgebildet ist,
- das Zufalls- bzw. Pseudozufallsmuster im Wesentlichen in der ersten räumlichen Dimension lokal moduliert und in der zweiten räumlichen Dimension im Wesentlichen nicht oder nur wenig moduliert ist,
- die zweite räumliche Dimension des Zufalls- bzw. Pseudozufallsmusters schräg zu den epipolaren Linien ausgerichtet wird,
- bei der ersten Beleuchtung ein erstes Bild von mindestens zwei Kameras aufgenommen wird,
- der Vergleich der Modulationsmerkmale auf einander zugeordneten epipolaren Linien verschiedener Kameras durchgeführt wird, und
- die Korrespondenz von Pixeln der Szene auf Basis eines Vergleichs der Modulationsmerkmale von Pixeln verschiedener Kameras bestimmt wird.

Eine allgemeine erfindungsgemäße Vorrichtung zum Erstellen eines Abstandsbildes einer Szene, umfassend mindestens zwei Kameras in Stereo-Anordnung, mindestens eine Bildauswerteeinheit zum Auswerten der Kamerabilder und mindestens eine Projektionseinheit zum Beleuchten der Szene, weist also die Merkmale auf, dass
- mittels der Projektionseinheit eine erste Beleuchtung auf die Szene projizierbar ist, die als ein Zufalls- oder Pseudozufallsmuster ausgebildet ist, das hinsichtlich wenigstens eines Modulationsmerkmals in zumindest einer räumlichen Dimension als Zufallsfolge bzw. Pseudozufallsfolge ausgebildet ist,
- das Zufalls- bzw. Pseudozufallsmuster im Wesentlichen in der ersten räumlichen Dimension lokal moduliert und in der zweiten räumlichen Dimension im Wesentlichen nicht oder nur wenig moduliert ist,
- die zweite räumliche Dimension des Zufalls- bzw. Pseudozufallsmusters schräg zu den epipolaren Linien ausgerichtet ist,
- bei der ersten Beleuchtung ein erstes Bild von mindestens zwei Kameras aufnehmbar ist, und
- die Korrespondenz von Pixeln der Szene auf Basis eines Vergleichs der Modulationsmerkmale von Pixeln verschiedener Kameras bestimmbar ist.

Die weiteren Ausgestaltungen eines Verfahrens oder einer Vorrichtung gemäß dieser die schräge Anordnung von Projektionsstreifen betreffenden Erfindung können gemäß einzelner oder mehrerer unterscheidender oder vorteilhafter weiterer Merkmale wie oben, die Verhältnisbildung betreffend erfolgen. Im Folgenden werden diese weiter erläutert.

Bevorzugte Ausführungsformen können dadurch gekennzeichnet sein, dass bei der zweiten Beleuchtung eine homogene Beleuchtung, ein ähnliches Zufalls- oder Pseudozufallsmuster wie bei der ersten Beleuchtung oder bevorzugt ein anderes Zufalls- oder Pseudozufallsmuster als bei der ersten Beleuchtung verwendet wird. Nach einem weiteren vorteilhaften Merkmal wird vorgeschlagen, dass Vergleich der Modulationsmerkmal-Verhältnisse auf einander zugeordneten epipolaren Linien verschiedener Kameras durchgeführt wird. Dabei kann in weiterer vorteilhafter Ausgestaltung vorgesehen sein, dass die Korrespondenz durch einen Vergleich der Werte von stückweiser, eindimensionaler, normierter Korrelation der Modulationsmerkmal-Verhältnisse entlang der epipolaren Linien hergestellt wird. Eine andere besonders vorteilhafte Weiterbildung kann darin bestehen, dass das Zufalls- bzw. Pseudozufallsmuster im Wesentlichen in einer ersten räumlichen Dimension lokal moduliert und in der zweiten räumlichen Dimension im Wesentlichen nicht oder nur wenig moduliert ist, wobei das Zufalls- bzw. Pseudozufallsmuster im Wesentlichen entlang der epipolaren Linien moduliert ist

In bevorzugten Ausführungsformen kann bei der Bildung des Modulationsmerkmal-Verhältnisses zu den ins Verhältnis gesetzten Modulationsmerkmalen ein Offset-Wert g hinzugerechnet oder abgezogen werden. Mit Helligkeitsverhältnis ist also das mathematische Verhältnis zweier Helligkeiten h1 und h2, also h1/h2 oder h2/h1 gemeint, oder eine sonstige Verhältnisbildung in diesem Sinne, z.B. (h1-g1)/(h2-g2), (h1+g1)/(h2-g2), (h1-g1)/(h2+g2), (h1+g1)/(h2+g2). Dabei kann g1 und g2 gleich oder verschieden sein. Die Addition oder Subtraktion der Werte g1 und/oder g2 kann beispielsweise der Berücksichtigung einer zuvor gemessenen Grundhelligkeit bei Umgebungslicht dienen, in diesem Fall sind g1 und/oder g2 bevorzugt diese Grundhelligkeiten, oder der Vermeidung der Division durch Null oder durch sehr kleine Werte dienen.

Besonders bevorzugt geschieht die Beleuchtung bei den beiden Aufnahmen aus jeweils dem gleichen Raumwinkel, oder zumindest näherungsweise. Dadurch wird sichergestellt, dass das Verhältnis von zwei gemessenen Helligkeitswerten nur durch die Projektion des Musters bestimmt ist und unabhängig von der Farbe, der Helligkeit, der Oberflächenrauhigkeit und der Oberflächenneigung des Objekts und, besonders wichtig, unabhängig vom Betrachtungswinkel, und damit für beide Kameras gleich ist.

Beispielsweise ist aus der 2D-Meßtechnik mit Bildverarbeitung bekannt, dass Werkstückkanten aus beleuchtungstechnischen Gründen je nach Ausprägung (Verrundung, Fase...) unterschiedliche Messergebnisse liefern können. Durch die Unabhängigkeit von der Oberflächenneigung werden hier solche Probleme beseitigt.

Die Unempfindlichkeit des erfindungsgemäßen Verfahrens gegenüber Oberflächeneigenschaften resultiert aus folgender Überlegung. Wenn man sich in die Lage eines Objektpunktes versetzt, der bei der ersten Bildaufnahme auf einem dunklen Streifen und bei der zweiten auf einem hellen Streifen eines projizierten Streifenmusters liegt, "sieht" er jedes Mal dieselbe Lichtquelle, also dieselbe Verteilung in demselben Raumwinkel. Bei nach rechts geneigtem Objekt gelangt zwar mehr reflektiertes Licht in die rechte Kamera als in die linke; dennoch ist für beide Kameras am Objektpunkt der Quotient der beiden Grauwerte exakt gleich. Dies gilt auch unabhängig von den Oberflächeneigenschaften.

Bevorzugt wird nicht nur mit einem, sondern mindestens mit zwei Zufalls- oder Pseudozufallsmustern gearbeitet; solche Ausführungsformen sind je nach technischem Ansatz (siehe unten) leichter zu realisieren und liefern außerdem signifikantere Messergebnisse (stärkere örtliche Strukturierung nach Verhältnisbildung).

Die mathematische Herstellung der Korrespondenz kann geschehen wie in der oben erwähnten Schrift US 6028672 gezeigt, im Unterschied dazu jedoch nicht auf Basis eines Vergleichs von Farben eines über das Blickfeld gehenden Farbverlaufs, sondern aufgrund des Vergleich der Helligkeitsverhältnisse (Quotient) von Pixeln der zwei Aufnahmen mit verschiedenen Mustern bzw. Zufallsmustern.

Bei der Korrespondenzfindung entfällt das oben geschilderte Problem der genauen Abstimmung der Kameras aufeinander, wenn man nicht nur die Verhältnisse der Helligkeitswerte vergleicht, sondern lokale Verläufe der Verhältnisse der Helligkeitswerte, was man beispielsweise durch stückweise normierte eindimensionale Korrelation entlang der epipolaren Linien realisieren kann. Ist die Orientierung zweier Kameras zueinander bekannt und kennt man die Abbildung eines Objektpunktes auf einen Bildpunkt in der Bildebene der einen Kamera, so ist die Lage des homologen Bildpunktes in der anderen Bildebene auf eine Linie beschränkt. Diese Linie nennt man die Epipolar Linie. Diese Linie ergibt sich geometrisch, wenn man die Epipolar Ebene, die sich aus dem Objektpunkt und den beiden Projektionszentren bildet, mit den Bildebenen schneidet.

Sobald die Korrespondenz hergestellt ist, kann das Abstandsbild nach bekannten Methoden berechnet werden (siehe z.B. Yi Ma, Stefano Soatto, Jana Kosecka, S. Shankar Sastry: An Invitation to 3D, Springer Verlag 2004 oder die oben erwähnte Schrift US 6028672).

Bei nicht-binären Zufallsmustern ist, abgesehen von unwahrscheinlichen Sonderfällen, grundsätzlich eine eindeutige Korrespondenzbestimmung pixelweise und über Interpolation sogar Subpixelweise möglich.

Die erfindungsgemäße Lösung vermeidet die oben zitierten Probleme mit Farbauswertung nach US 6028672 und US 6556706, außerdem den oben geschilderten allgemeinen Nachteil von Verfahren mit über das Blickfeld kontinuierlichen, gegenläufigen Beleuchtungsmustern: Die Zufallsmuster dürfen lokal hohen Kontrast besitzen. Der Erfindung liegt die Erkenntnis zugrunde, dass ein lokal kontinuierlicher Verlauf, wie bisher vorgeschlagen, nicht erforderlich ist. Es genügt, wenn bei korrespondierenden Punkten lokal der Verlauf des oben genannten Verhältnisses der Helligkeitswerte (allgemein des Modulationsmerkmals) gleich oder sogar nur gleichartig ist. Es dürfen nur nicht zu lange, sich wiederholende Verläufe von Verhältnissen auftreten, um Mehrdeutigkeiten zu vermeiden. Bei Pseudozufallsmustern kann dies ausgeschlossen werden, bei Zufallsmustern ist es aufgrund der Zufallsnatur unwahrscheinlich. Dennoch gelegentlich auftretende Fälle können durch Wiederholung der Aufnahme mit mindestens einem weiteren Zufalls- bzw. Pseudozufallsmuster so gut wie ausgeschlossen werden.

Die oben geschilderten Probleme bei texturierten Beleuchtungsmustern mit texturelementeweiser Korrespondenzbestimmung werden durch das pixelweise Arbeiten und über die Verhältnisrechnung vermieden; eine Bildanalyse zum Bestimmen der Position der Texturelemente entfällt.

Andererseits wird gerade aufgrund der texturartigen Zufallsmuster, mit pixelweiser Verhältnisrechnung, das oben genannte Problem gegenläufiger Beleuchtungsmuster (Keilmuster) über das Blickfeld vermieden, dass sich bei ebener Vorlage die Helligkeitswerte benachbarter Pixel nur wenig unterscheiden; aufgrund der Zufallsnatur kann dieser Fall nur für einzelne oder sehr wenige direkt benachbarte Pixel auftreten.

Das Verfahren kann vorteilhaft mehrfach mit verschiedenen Beleuchtungseinheiten, jede bestehend aus einer oder mehreren Projektionseinheiten, realisiert werden, mit Fusion der Bilder bzw. der Ergebnisse oder Zwischenergebnisse, lokal oder global realisiert aufgrund von Sicherheitsmaßen (mittels der Bildauswertelogik, z.B. aufgrund Kontrast, Ausblenden von Ergebnissen aus Helligkeitsübersteuerten Regionen) oder aufgrund Mittelung oder aufgrund Mehrheitsentscheidungen. Ein besonders praxisrelevanter Vorteil ist dabei das automatische Unterdrücken lokaler Übersteuerung bei lokalem Glanz (die Glanzwinkelbedingung ist nur für eine der Beleuchtungseinheiten erfüllt).

Pixelweise im Sinne der Ansprüche heißt für jeweils eine Kamera, dass die Helligkeiten (bzw. allgemein das Modulationsmerkmal) von Pixeln (Bildpunkten) gleicher (oder zumindest näherungsweise gleicher) Bildkoordinaten zueinander ins Verhältnis gesetzt werden. Lokale Mittelungen können sinnvoll sein, z.B. für Subpixelalgorithmen, oder ein systematischer kleiner Offset kann sich als notwendig erweisen. Für dynamische Szenen, z.B. bei bewegten Werkstücken, sind entsprechend dem Verschiebungsvektorfeld (im Bildbereich) versetzte Pixel ins Verhältnis zu setzen. In einfachen Fällen (bekannte Werkstückverschiebung, z.B. auf Förderband, langbrennweitige Betrachtung, geringe Höhenunterschiede) ist das Verschiebungsvektorfeld a priori bekannt. Mit kleiner werdender Brennweite und mit steigenden Höhenunterschieden ist jedoch das Verschiebungsvektorfeld zunehmend vom Endergebnis, der Höhe der Objektpunkte, abhängig. Es wird erwartet, dass die Lösung des Teufelskreises mit iterativen Methoden und geeigneten Heuristiken möglich ist, z.B. durch Schätzung des Verschiebungsvektorfeldes mit zunehmender Genauigkeit, Optimierung mit einem Gütemaß aus zu minimierender mittlerer Tiefenvariation und zu maximierender Ähnlichkeit aus korrespondierenden Verhältniswerten. Dies kann mathematisch anspruchsvoll sein, stellt aber kein grundsätzlich unlösbares Problem dar.

Die technische Realisierung von Zufallsmustern kann beispielsweise durch die Verwendung eines Beamers (Mikrospiegel-Array) zum programmierbaren Projizieren von Zufalls- oder Pseudozufallsmustern erfolgen.

Natürlich kann eine Zwei-Kamera-Stereoanordnung auch mit einer einzelnen Kamera in verschiedenen Positionen realisiert werden, z.B. an einem Roboterarm.

Natürlich betrifft das Verfahren genauso Anordnungen mit mehr als zwei Kameras, mit Stereoauswertung jeweils zwischen Kamerapaaren; ggf. mit Fusion der Ergebnisse aufgrund von Sicherheitsmaßen (z.B. aufgrund Kontrast, Ausblenden von Ergebnissen aus helligkeitsübersteuerten Regionen) oder Mehrheitsentscheidungen.

Natürlich kann die geschilderte Vorgehensweise auch mehrfach in verschiedener Lage relativ zur Objektoberfläche realisiert werden, z.B. mit dem Objekt oder mit Kameras und ggf. auch Beleuchtung an einem Roboterarm, mit anschließender Fusion der Ergebnisse.

Natürlich können die hier geschilderten Verfahren auch für eine Kombination von Abstandsbildern mit Grauwertbildern oder Farbbildern verwendet werden. Dies ist z.B. bei Körperscannern für Zwecke der Visualisierung üblich.

Natürlich kann die Auswerteeinheit in die Kamera(s) integriert sein.

Vorteilhafte zusätzliche Merkmale erfindungsgemäßer Vorrichtungen, die in den Figuren näher erläutert werden, können allgemein wie folgt beschrieben werden:
- Mindestens zwei Beleuchtungen sind mit einem Zufalls- oder Pseudozufallsmuster durchführbar.
- Mindestens ein Zufalls- oder Pseudozufallsmuster ist ein Helligkeitsmuster.
- Es ist eine Projektionseinheit mit zwei überlagerten Gittern vorgesehen, die zueinander einen Abstand haben, wobei mindestens eines eine zufällige oder pseudozufällige Struktur aufweist, und eine Beleuchtung mit mindestens zwei Lichtquellen, die durch die Gitter hindurchleuchten oder sie beleuchten können, und dabei unterschiedliche Muster ergeben.
- Es ist eine Projektionseinheit mit zwei überlagerten Gittern vorgesehen, die zueinander einen Abstand haben, wobei bei mindestens einem die Phase und/oder die Frequenz des Gitters in pseudozufälliger Weise variiert, und eine Beleuchtung mit mindestens zwei Lichtquellen, die durch die Gitter hindurchleuchten oder sie beleuchten können, und dabei unterschiedliche Moirémuster ergeben.
- Es ist eine Projektionseinheit mit einer transparenten oder teiltransparenten Schicht im Strahlengang der Projektionseinheit vorgesehen, die eine zufällige oder pseudozufällige Struktur aufweist, und eine Beleuchtung mit mindestens zwei Lichtquellen, die durch die Struktur hindurchleuchten oder sie beleuchten können, und dabei unterschiedliche Muster ergeben.
- Dabei kann die transparente oder teiltransparente Schicht ein Körper mit einer leichten Oberflächenwelligkeit oder Oberflächenrauhigkeit sein, vorzugsweise eine dünne wellige Glasscheibe.
- Es ist eine lokal unterschiedlich transparente Maske in Form eines Pseudozufallsmusters vorgesehen, das durch elektrische Ansteuerung veränderbar ist.
- Es sind eine oder mehrere Projektionseinheiten vorgesehen, die jeweils mindestens zwei nahe beisammen liegende, näherungsweise punkt- oder linienförmige Lichtquellen umfassen, deren Lichtkegel unterschiedliche Helligkeitsmuster ausstrahlen.
- Es ist eine Projektionseinheit mit zwei zueinander bewegbaren, überlagerten Mustern vorgesehen, wobei mindestens eines eine pseudozufällige Struktur aufweist.
- Es ist eine Projektionseinheit mit zwei zueinander bewegbaren überlagerten Gittermustern vorgesehen, wobei bei mindestens einem die Phase und/oder die Frequenz in pseudozufälliger Weise variiert.
- Es ist eine Projektionseinheit mit einer zufälligen oder pseudozufälligen Struktur vorgesehen, die rotatorisch oder translatorisch bewegt werden kann.
- Es ist eine Projektionseinheit vorgesehen, die eine Maske aufweist, die einen transparenten Behälter umfasst, in dem sich stochastisch teiltransparente oder undurchsichtige Partikel bewegen.
- Es ist eine Projektionseinheit mit mindestens einer näherungsweise punktförmigen oder linienförmigen Lichtquelle vorgesehen, deren Lichtkegel Helligkeitsmuster ausstrahlen mit festen Pseudozufälligkeitsmustern, wobei die Lichtquellen durch Vibration bewegbar sind.
- Es ist ein sich über die Szene bewegender Lichtschlitz vorgesehen, der in zufälliger oder pseudozufälliger Weise helligkeitsmoduliert ist.

Die Erfindung bietet viele Vorteile gegenüber dem Stand der Technik:
- Das Verfahren funktioniert auch für farbige Objekte, auch bei starker Farbsättigung (ein Problem bei der Codierung mit Farbmustern, siehe Review of 20 years of range sensor development, Journal of Electronic Imaging, 13 (1): 231-240, Jan. 2004, National Research Council Canada).
- Für das Erstellen eines kompletten Abstandsbildes sind nur zwei Aufnahmen mit Standardkameras erforderlich.
- Bei klassischen Stereoverfahren ist die Korrespondenz nur bei Helligkeits-Diskontinuitäten berechenbar, z.B. an Objektkanten. Mit den hier vorgestellten Verfahren gilt diese Einschränkung nicht; für die Korrespondenzfindung entfällt eine komplizierte Bildanalyse zum Bestimmen von Bildelementen (Kanten, Ecken, Blobs etc).
- Ein wesentlicher Vorteil des Verfahrens ist, dass lokale Diskontinuitäten der Helligkeit, durch Färbung, Aufdruck, Schmutz, Lunker, Markierungen, Bearbeitungsriefen, Ölfilm und dgl. keine Rolle spielen (sie können für die Korrespondenzfindung unter Umständen sogar hilfreich sein). Dies gilt auch für natürliche Strukturen, wie sie z.B. bei Textilien auftreten.
- Das oben geschilderte Problem der Division durch kleine Zahlen (dunkle Oberflächenpartie und kleine Helligkeit) spielt hier insofern eine geringe Rolle, als aufgrund des Zufallsstruktur nur kleine lokale Bereichen davon betroffen sein können, weshalb daraus nur geringe Disparitätsfehler bei der Korrespondenzfindung resultieren.
- Ein anwendungstechnischer Vorteil besteht darin, dass die Beleuchtung nicht kalibriert zu sein braucht. Man kann also einerseits eine Einheit mit fest miteinander verbundenen vorkalibrierten Stereokameras verwenden, andererseits eine oder mehrere Beleuchtungseinheiten, bestehend aus einer oder mehreren Projektionseinheiten, die abhängig von der konkreten Aufgabenstellung beliebig im Raum montierbar sind (Zugänglichkeit, Vermeiden von Glanzwinkeln und Schatten) ohne irgendeine Beleuchtungs-Kalibrierung und ohne strikte Forderung an eine scharfe Abbildung der Zufallsmuster; die Beleuchtungseinheiten müssen nur die Objekte grob "treffen".
- Zuverlässige Abstandsbilder, wie sie mit dem erfindungsgemäßen Verfahren gewonnen werden, sind grundsätzlich einfacher auszuwerten als Grauwertbilder und für den Benutzer auch verständlicher in der Parametrierung: Die mitunter komplexen Zusammenhänge zwischen Beleuchtungsgeometrie, Abbildungsgeometrie und Reflexionseigenschaften brauchen bei der Erfindung vom Anwender nicht bedacht zu werden.
- Das Verfahren ist gegenüber bisher bekannter Technik wesentlich unempfindlicher gegen verschiedene Oberflächeneigenschaften wie lokale Neigung, Rauheit, Bedruckung, Verschmutzung. Bearbeitungsspuren usw. Flächen unterschiedlicher Reflexionskeule werden mit dem neuen Sensor zuverlässig und schnell als Höhenbild erfasst.
- Das Verfahren ist für viele klassische Einsatzgebiete geeignet, wie der Metall- oder Elektrogeräteindustrie; es bietet sich auch für eine Vielzahl alternativer Anwendungsfelder an wie Archäologie (Vorteil des Wegfalls mechanisch bewegter Teile, z.B. Laserscanner, sowie Vorteil in der Handhabung und beim Transport der Vorrichtung), Textilindustrie, Biometrie (z.B. bei der Gesichtserkennung, die mit Abstandsbildern einfacher zu realisieren ist als mit Grauwertbildern), Medizin oder Reverse Engineering. In der Textilindustrie kann beispielsweise unabhängig von Farbmustern ein Faltenschlag zuverlässig erkannt und bewertet werden.
- Abschattungsprobleme, wie sie bei Stereokameras grundsätzlich auftreten, können durch Verwendung von mehr als zwei Kameras unterbunden oder zumindest verringert werden. Natürlich können die vorhandenen Kameras auch zusätzlich zu diesen Verfahren für konventionelle Grauwert- oder Farbauswertung eingesetzt werden.

Weitere Einzelheiten und Vorteile der Erfindung werden anhand von Ausführungsbeispielen unter Bezugnahme auf die beigefügten Zeichnungen erläutert. Die beschriebenen Merkmale können einzeln oder in Kombination verwendet werden, um bevorzugte Ausgestaltungen der Erfindung zu schaffen. Es zeigen:
- Fig. 1: eine erste Vorrichtung mit zwei Gittern und linienförmigen Lichtquellen,
- Fig. 2: eine zweite Vorrichtung mit einer Maske und einer punktlichtförmigen Lichtquelle,
- Fig. 3: eine Einzelheit der Projektionseinheit zu Fig. 3,
- Fig. 4: eine Abwandlung zu Fig. 3,
- Fig. 5: die Beleuchtung einer Szene mit mehreren Projektionseinheiten,
- Fig. 6: zwei benachbarte punktförmige Lichtquellen mit strukturiertem Lichtkegel,
- Fig. 7: Ausführungsformen erfindungsgemäßer Vorrichtungen mit mehreren Projektionseinheiten,
- Fig. 8: Moirémuster mit zwei regelmäßigen Gittern,
- Fig. 9: Moirémuster mit pseudozufälligen Gittern,
- Fig. 10: Überlagerungsmuster mit pseudozufälligen Strichmustern,
- Fig. 11: eine Abwandlung zu Fig. 2,
- Fig. 12: eine Maske mit sich stochastisch bewegenden Partikeln,
- Fig. 13: eine dritte Vorrichtung mit einem Scanner,
- Fig. 14: eine abgewandelte Einzelheit zu Fig. 1,
- Fig. 15: Zuordnungen bei Quasizufallsfolgen,
- Fig. 16: Zuordnungen bei schrägen Streifenmustern und
- Fig. 17: quer und schräg zu epipolaren Linien ausgerichtete Projektionsstreifen.

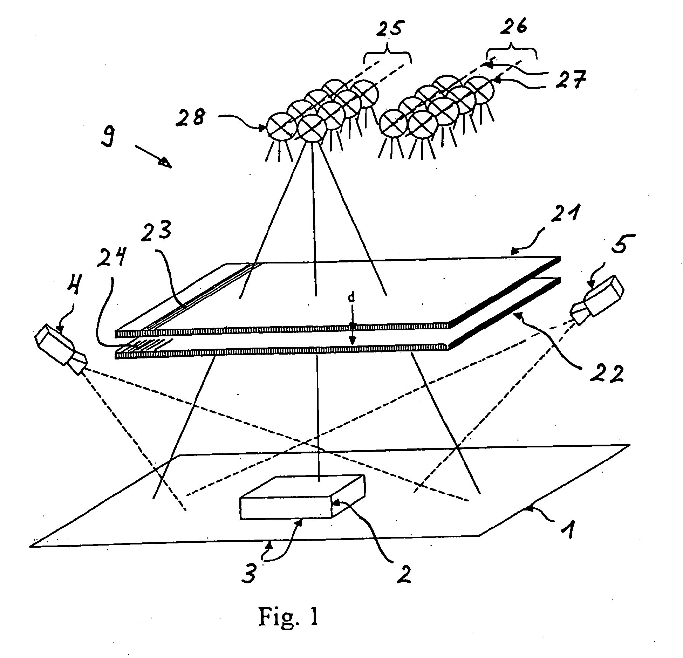

Im Folgenden werden anhand der Fig. 1 bis 14 mehrere Merkmale der Erfindung anhand von Ausführungsformen beschrieben,bei denen in Abwandlung zu der Erfindung das Zufalls-bzw. pseudozufallsmaster nicht schräg, sondern quer zu den epipolaren Linien angeordnet ist. Generell sind Ausführungsformen ohne mechanisch bewegte Komponenten bevorzugt.

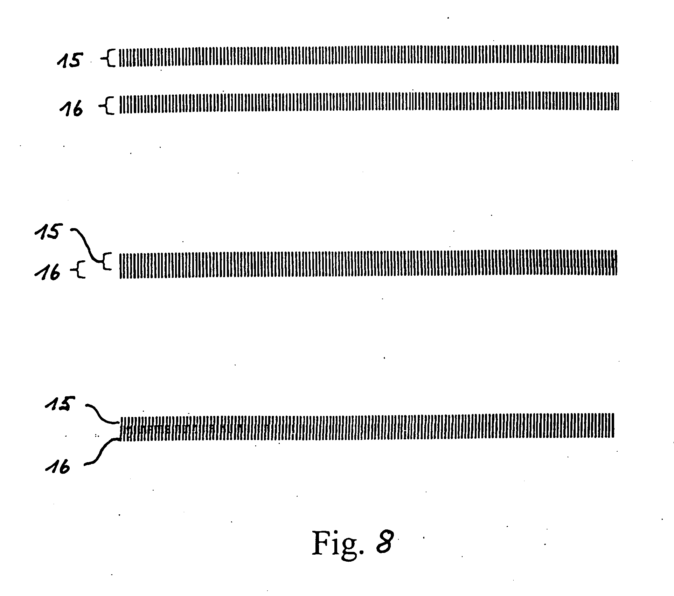

Die Fig. 1 zeigt eine solche bevorzugte Ausführungsform ohne Bewegung von Teilen. Die Zufallsmuster werden hier, wie unten in Fig. 8 erläutert wird, in Moirétechnik durch Überlagerung von zwei optischen Gittern 21, 22 realisiert, wobei bei mindestens einem Gitter die Gitterkonstante in pseudozufälliger Weise variiert. Erfindungsgemäß haben die Gitter 21, 22 zueinander einen Abstand d, so dass sich bei Beleuchtung aus unterschiedlicher Richtung unterschiedliche Moirémuster ergeben, ohne dass eine mechanische Bewegung der Gitter 21, 22 erforderlich wäre.

In dem Beispiel in Fig. 1 sind die streifenförmigen Gitterstrukturen 23, 24 grob gesehen quer zu den epipolaren Linien angeordnet, so dass auch die Moiré-Zufallsmuster grob gesehen quer zu den epipolaren Linien verlaufen. Im Beispiel ist die Maske des oberen Gitters 21 gleichförmig, die Maske des unteren Gitters 22 pseudozufällig strukturiert. Beleuchtet wird die Szene über eine Projektionseinheit, die zwei näherungsweise punktförmige oder linienförmige oder, durch Zusammensetzung von punktförmigen Lichtquellen, linienförmige Lichtquellen umfasst. Fig. 1 zeigt zwei Lichtquellen 25, 26, bestehend aus je zwei Reihen 27 punktförmiger Lichtquellen 28, z.B. LEDs, die zusammen jeweils näherungsweise linienförmige Lichtquellen 25, 26 bilden; sie sind vorteilhaft zumindest näherungsweise wie die streifenförmigen Gitterstrukturen 23, 24 ausgerichtet.

Die Szene in Fig. 1 umfasst eine Unterlage 1, auf der ein Werkstück 2 liegt. Unterlage 1 und Werkstück 2 werden kurz als Objekt 3 bezeichnet. Es ist die Höhe der Oberflächenpunkte von Unterlage 1 und Werkstück 2, kurz der Objektpunkte, zu bestimmen. Die Szene kann natürlich auch nur aus einem Ausschnitt eines Werkstückes 2 bestehen. Die Szene wird über zwei Stereo-Kameras 4,5 betrachtet und mit den linienförmigen Lichtquellen 25, 26 durch die Gitter 23, 24 hindurch beleuchtet.

Zum Erzeugen von zwei verschiedenen Pseudozufallsmustern auf dem Objekt 3 werden die Reihen 27 jeweils einer Projektionseinheit bzw. einer linienförmigen Lichtquelle 25, 26 jeweils einzeln eingeschaltet. Dadurch entstehen in der Szene unterschiedliche Muster. Der große Vorteil dieses Ansatzes besteht darin, dass a) keine Bewegung erforderlich ist, dass b) die entstehenden Muster drastisch unterschiedlich sind, dass c) trotzdem die Beleuchtung effektiv aus fast dem gleichen Raumwinkel erfolgt (wichtig, siehe oben) und dass d) die Charakteristik der Pseudozufallsmuster an die Anwendung angepasst werden kann.

Mit mehreren Projektionseinheiten bzw. linienförmigen Lichtquellen 25, 26 wie in Fig. 1 gezeigt, kann zusätzlich, mit den gleichen Gittern 23, 24, ein (wiederum anderes) Paar von Pseudozufallsmustern erzeugt werden, das jedoch bei Beleuchtung mit der anderen Lichtquelle aus einer bewusst anderen Raumrichtung entsteht. Damit kann eine weitere, unabhängige Auswertung mit Fusion der Ergebnisse realisiert werden, wie oben für verschiedene Beleuchtungseinheiten geschildert. Vorteile siehe auch dort.

Die Anordnungen werden vorzugsweise so getroffen, dass die Zufallsmuster im Bild grob entlang den epipolaren Linien verlaufen; quer dazu ist es eher günstig, wenn nur geringe Helligkeitsvariationen vorliegen (wichtig bei ungenauer Kamerakalibrierung).

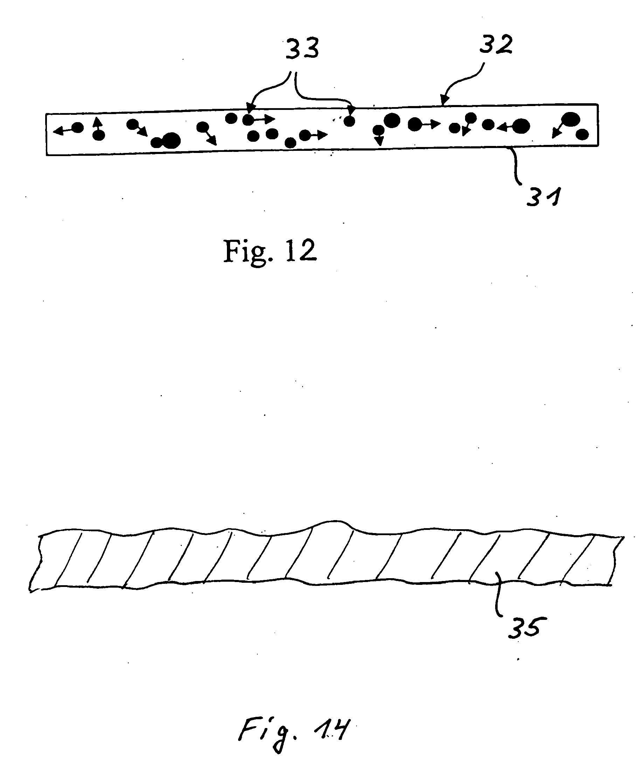

In Abwandlungen zu den in der Fig. 1 benutzen Gittern 21, 22 kann allgemein eine Projektionseinheit mit einer transparenten oder teiltransparenten Schicht im Strahlengang der Projektionseinheit verwendet werden, die eine zufällige oder pseudozufällige Struktur aufweist, und eine Beleuchtung mit mindestens zwei Lichtquellen, die durch die Struktur hindurchleuchten oder sie beleuchten können, und dabei unterschiedliche Muster ergeben. In Fig. 14 ist eine solche transparente oder teiltransparente Schicht beispielsweise als ein Körper mit einer leichten Oberflächenwelligkeit oder Oberflächenrauhigkeit, vorzugsweise in Form einer dünnen welligen Glasscheibe 35 dargestellt. Die Oberflächenwelligkeit ist dabei in der dargestellten Querschnitt der Glasscheibe 35 zur Verdeutlichung übertrieben dargestellt, normale produktionsbedingte Oberflächenwelligkeiten, die eine zufallsbedingte Struktur haben, von gewöhnlichen Gebrauchsgläsern sind in der Regel ausreichend.

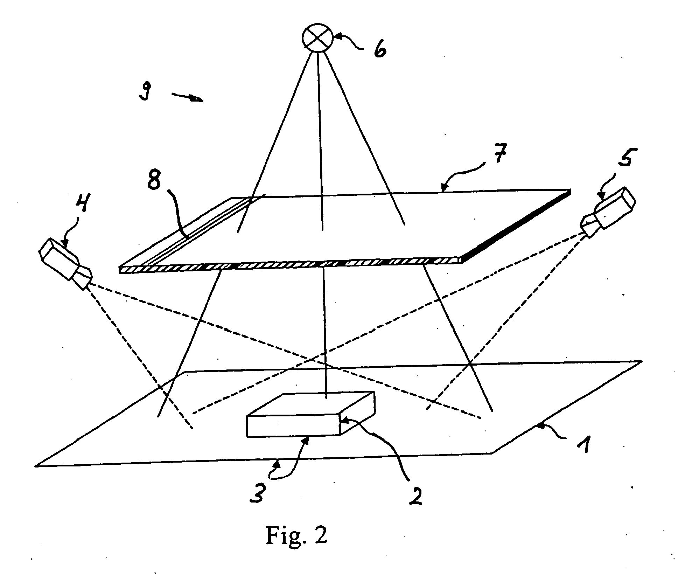

Die Fig. 2 zeigt eine Abwandlung zu Fig. 1. Dabei wird die Szene mit dem Objekt 3 mit einer näherungsweise punktlichtförmigen Lichtquelle 6 beleuchtet. Im Beleuchtungs-Strahlengang befindet sich eine Maske 7, die lokal unterschiedlich transparent in Form eines Pseudozufallsmusters ist. Das Muster besteht vorzugsweise aus Streifen 8, die in den Bildern grob gesehen quer zu den epipolaren Linien verlaufen. Die Struktur der Maske 7 ist durch elektrische Ansteuerung veränderbar, z.B. wie von Flüssigkristallanzeigen bekannt; auf diese Weise sind mit bekannter DisplayTechnik unterschiedliche Streifenmuster 8 realisierbar. Es ist damit auch möglich, ineinander verwobene unterschiedliche Farbmuster zu realisieren.

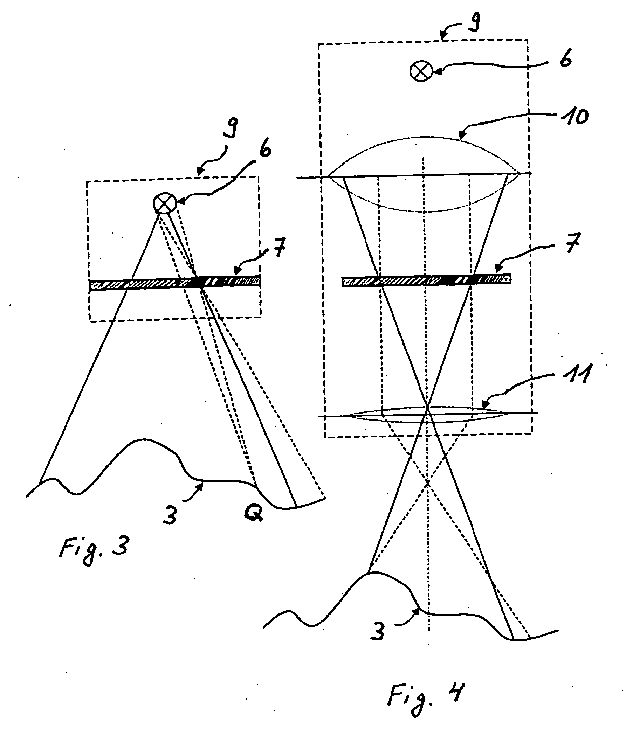

Die Lichtquelle 6 sollte in dem Ausführungsbeispiel gemäß Fig. 2 möglichst punktlichtförmig sein, um eine allzu starke Überlagerung von Strahlen unterschiedlicher Intensität zu vermeiden. Aus Fig. 3 ist ersichtlich, wie sich sonst bei einer ausgedehnten Lichtquelle 6 an einem Objektpunkt Q helle und dunkle Stellen bei der Projektion überlagern können. Eine gewisse Verschmierung (Unschärfe) des abgebildeten Musters macht jedoch prinzipiell nichts aus. Eine Verbesserung der Projektionseinheit 9 zeigt Fig. 4, bei der durch eine klassische Abbildung mit einem Kondensor 10 und ein Objektiv 11 ein schärferes Muster auf die Szene 3 projiziert wird. Auch hier ist allerdings auf eine möglichst kleine Apertur zu achten (Schärfentiefe). Die Projektionseinheit 9 bei Fig. 2 besteht also aus Beleuchtung (Lichtquelle 6) und steuerbarer Maske 7, ggf. mit Kondensor 10 und Objektiv 11. In Fig. 1 umfasst eine entsprechende Projektionseinheit 9 die dort dargestellten Komponenten.

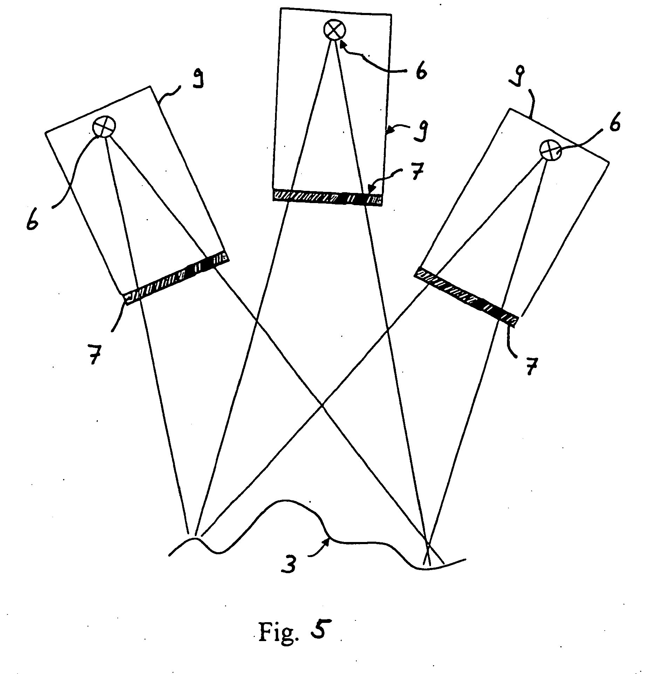

Es ist natürlich möglich, mit mehreren Projektionseinheiten 9 zeitlich hintereinander zu arbeiten und die Ergebnisse zu fusionieren (lokale Mittelung oder Auswahl aufgrund von Qualitätsmaßen); sollen sie gleichzeitig aktiv sein, so ist, wie in Fig. 5 dargestellt, darauf zu achten, dass die von den Beleuchtungseinheiten 9 jeweils projizierten Muster möglichst gut koinzidieren, ansonsten kommt es, wie in Fig. 4, zur Überlagerung heller und dunkler Stellen der Muster auf dem Objekt 3.

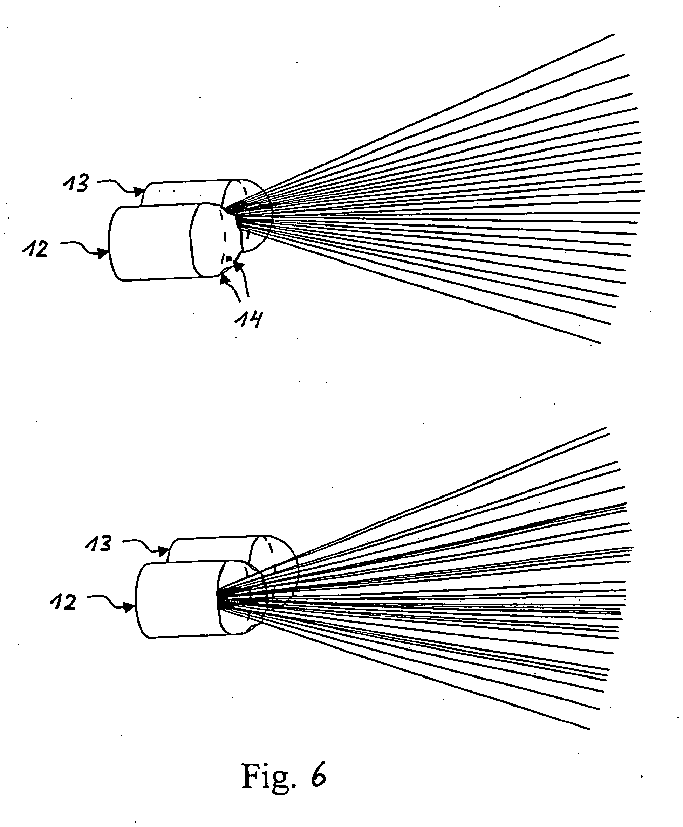

Fig. 6 zeigt eine Anordnung in einer Projektionseinheit, in der zwei näherungsweise punktförmige Lichtquellen 12, 13, z.B. LEDs, nah zueinander benachbart angeordnet sind, wobei die Lichtkegel der LEDs 12, 13 unterschiedliche Helligkeitsmuster ausstrahlen, so dass die Lichtquellen 12, 13 einen strukturierten Lichtkegel aufweisen. Man bemüht sich bei der Herstellung von LEDs um möglichst homogene Lichtkegel, aufgrund von Unregelmäßigkeiten der Oberflächen (Linsen-Effekte), Materialeinschlüssen, Luftblasen, Geometrieabweichungen etc. ergeben sich jedoch mehr oder weniger zufällige inhomogene Strukturen. Diese "Dreckeffekte" 14 können dazu herangezogen werden, Zufallsmuster zu projizieren. Solche Effekte können natürlich teilweise auch absichtlich durch gezielte Herstellung oder Bearbeitung der Lichtquellen 12, 13 herbeigeführt werden. Man kann den gleichen Effekt anstelle von Dreckeffekten auch durch Vorsatz einer entsprechend strukturierten Maske 7 erreichen.

Die beiden LEDs 12, 13 in Fig. 6 projizieren nun einerseits unterschiedliche Zufallsmuster, projizieren jedoch andererseits aufgrund ihrer räumlichen Nähe näherungsweise aus dem gleichen Raumwinkel. In der Fig. 6 besitzt die vordere LED 12 einen stark strukturierten, die hintere LED 13 einen homogenen Lichtkegel. Die Projektionseinheit 9 besteht hier aus beiden LEDs und ggf. einer Maske 7. Im unteren Teil von Fig. 6 ist die vordere LED 12 und im oberen Teil von Fig. 6 ist die hintere LED 13 eingeschaltet.

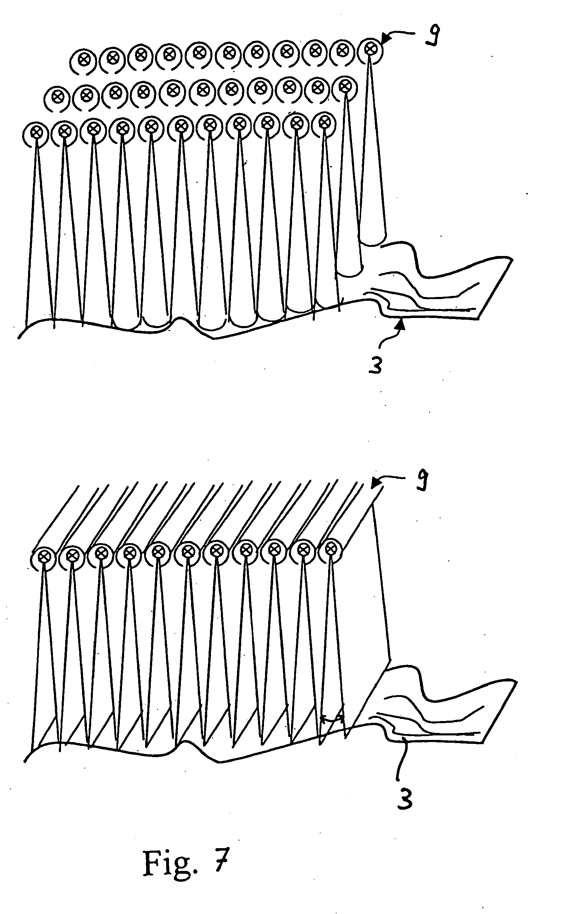

In Fig. 7 sind Ausführungsformen mit mehreren Projektionseinheiten 9 veranschaulicht. Wesentlich ist, dass sich die Lichtkegel der Projektionseinheiten 9, sofern sie gleichzeitig eingeschaltet sind, entweder nicht oder nur gering überlappen, oder dass sie gemäß Fig. 5 aufeinander abgestimmt sind. Linienförmige Projektionseinheiten 9 gemäß dem unteren Teil von Fig. 7 sollten im Allgemeinen quer zu den epipolaren Linien orientiert sein; wie oben erwähnt sollten die Zufallsmuster im Bild grob entlang den epipolaren Linien verlaufen und quer dazu nur geringe Helligkeitsvariationen aufweisen.

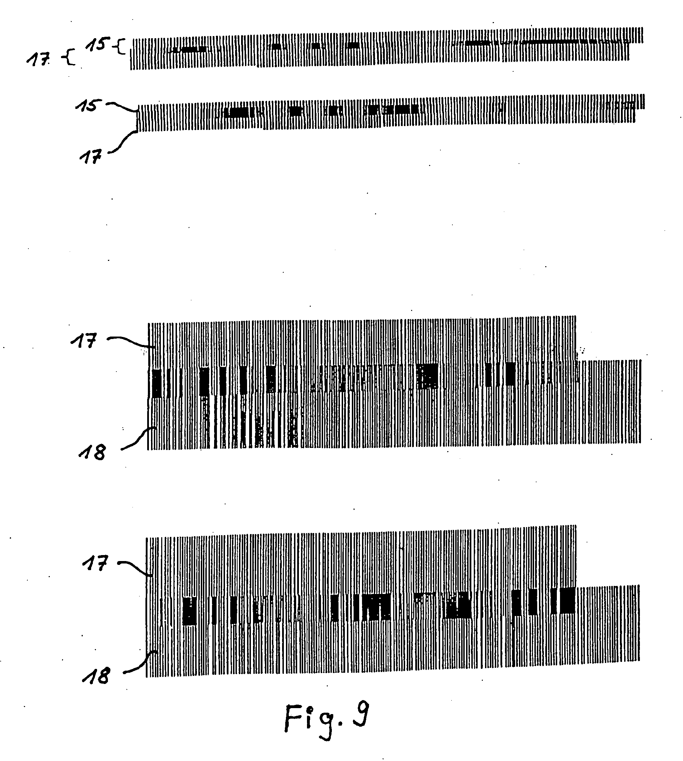

Die Fig. 8 veranschaulicht das in der Ausführungsform gemäß Fig. 9 verwendete Moiré-Prinzip. Die Fig. 8 zeigt oben ein regelmäßiges Gitter 15, darunter ein weiteres regelmäßiges Gitter 16 mit geringfügig abweichender Gitterkonstante. Durch Überlagerung der Gitter 15 und 16 entsteht das in der Mitte von Fig. 8 dargestellte Interferenz- bzw. Überlagerungsmuster. Eine geringfügige Verschiebung der Gitter 15, 16 gegeneinander verändert die Phase des Interferenzmusters grob, wobei sich das in der Mitte von Fig. 8 dargestellte Muster in das unten in Fig. 8 dargestellte Muster verändert. Die Fig. 9 zeigt vier Doppelreihen, bei denen jeweils zwei Gitter überlagert werden. In der oberen Doppelreihe die Überlagerung eines gleichmäßigen Gitters 15 mit einem Gitter 17, das gegenüber dem Gitter 15 pseudozufällige Abweichungen der lokalen Gitterkonstanten besitzt, dargestellt. Dabei entsteht durch Überlagerung der Gitter 15 und 17 ein entsprechendes pseudozufälliges Muster. Das technisch Interessante daran ist, dass durch eine sehr kleine Änderung der Relativlage der Gitter 15, 17 eine grobe Veränderung der pseudozufälligen Interferenzmuster entsteht, die beispielsweise zu dem in der zweiten Doppelreihe Fig. 8 dargestellten Muster führt. Man kann also mit einer sehr kleinen Bewegung eines Gitters 15 oder 17, z.B. durch Piezoelemente, grobe Änderungen an pseudozufälligen Mustern erzeugen.

Die dritte und die vierte Doppelreihe in Fig. 9 zeigen das gleiche Prinzip, wobei zwei verschiedene pseudozufällige Muster von Gittern 17, 18 gleicher oder nahezu gleicher Gitterkonstante überlagert werden, bei denen an zufälligen Stellen Phasensprünge um 180 Grad eingebaut sind (vorzugsweise so, dass keine zwei opake Striche aufeinander folgen dürfen). Bei einer sehr geringen gegenseitigen Verschiebung der Gitter 17, 18 aus der dritten Doppelreihe in Fig. 9 resultiert beispielsweise das in der vierten Doppelreihe dargestellte, stark veränderte Überlagerungsmuster. Eine geringe Verdrehung der Muster bzw. Gitter gegeneinander führt zu einem Moire, quer zum erwünschten Moire, dieses ist jedoch "langwellig" und deshalb nicht störend.

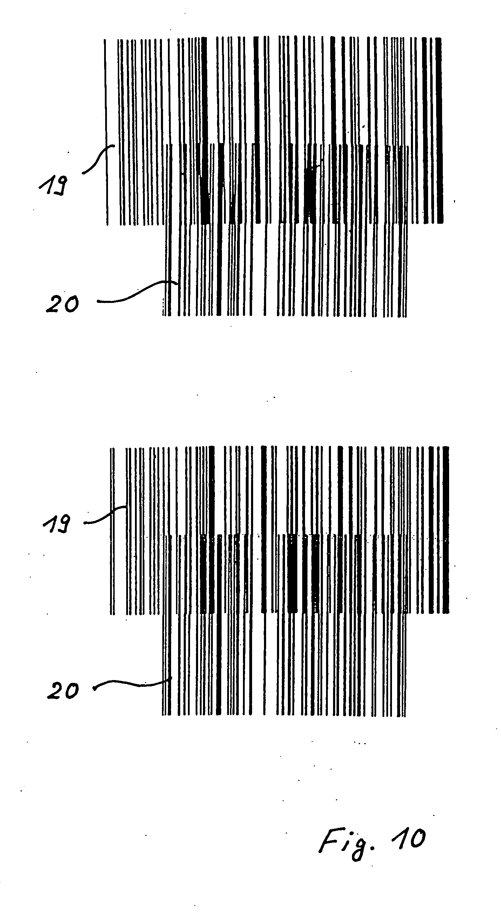

Die Fig. 10 zeigt ergänzend, dass sich auch bei Überlagerung einfacher, pseudozufälliger Strichmuster 19, 20, durch eine Verschiebung unterschiedliche Zufallsmuster erzeugen lassen. In der unteren Doppelreihe in Fig. 10 ist die relative Lage der zwei Muster 19, 20 gegenüber derjenigen in der oberen Doppelreihe verändert. Hier allerdings ist eine größere relative Verschiebung der Gitter 19, 20 zueinander erforderlich als bei Moire-Technik, daher ist die Moiré-Technik bevorzugt.

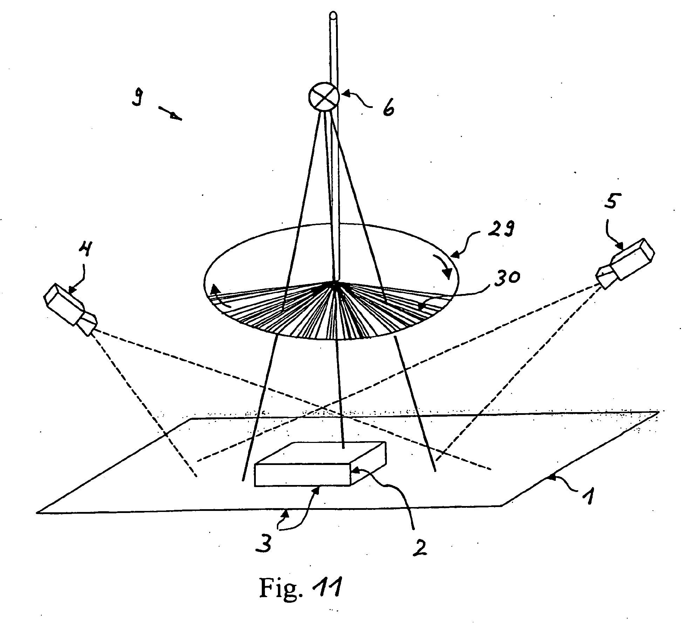

Die Fig. 11 zeigt eine gegenüber der Fig. 2 abgewandelte Ausführungsform, bei der eine bewegliche Maske 29 mit festem Pseudozufallsmuster 30, d.h. lokal unterschiedlich transparent mit einer zufälligen oder hier pseudozufälligen Struktur, verwendet wird. Die Maske 29 bewegt sich im Beleuchtungskegel der punktförmigen Lichtquelle 6, beispielsweise wie dargestellt rotatorisch. Die zwei bei dem erfindungsgemäßen Verfahren durchzuführen Bildaufnahmen des Objekts 3 geschehen zu verschiedenen Zeitpunkten in der Weise, dass sie effektiv mit verschiedenen Beleuchtungsmustern erfolgen. In der Fig. 11 wird speziell die Maske 29 gedreht, sie kann natürlich ebenso gut linear oder rotatorisch oszillieren. Es ist lediglich bei den Bildaufnahmen darauf zu achten, dass sie für beide Kameras 4, 5 exakt gleichzeitig und mit gleichen Integrationsintervallen stattfinden. Diese Voraussetzung entfällt, wenn die Maske 29 durch eine mechanische Einrichtung zwei diskrete feste Stellungen einnehmen kann.

Die beschriebenen erfindungsgemäßen Ausführungsformen mit durchleuchteten Mustern, einschließlich Moire bildenden Mustern, betreffen natürlich in analoger Weise anstelle von Durchlicht auch entsprechende Ausführungsformen mit Auflicht mit lokal verschiedenartig reflektierenden Spiegelflächen.

Die Fig. 12 zeigt eine im Rahmen der Erfindung zur Erzeugung eines Zufallsmusters verwendbare Maske 31, die von einem transparenten Behälter 32 gebildet ist, in dem sich stochastisch teiltransparente oder undurchsichtige Partikel 33 bewegen, z.B. in einer Flüssigkeit. Solch eine Anordnung könnte z.B. in der Mikroskopie eine Rolle spielen. Auch hier ist darauf zu achten, dass die erfindungsgemäß durchgeführten Bildaufnahmen miteinander synchronisiert sind.

Natürlich können die Ausführungsformen gemäß den Fig. 11 und 12 ebenso wie die nach Fig. 2 durch die klassische Projektionsanordnung mit Kondensor 10 und Objektiv 11 ergänzt werden (siehe Fig. 4). Dies gilt auch für die Anordnung nach Fig. 1, wobei man die Schärfenebene zwischen die beiden Muster 23, 24 legen wird und über einen geeigneten Strahlengang dafür sorgt, dass bei den beiden Bildaufnahmen die wirksame Lichtquelle (analog zur Pupille einer Aufnahmeanordnung) der Projektionsanordnung 9 an zwei leicht verschiedene Stellen zu liegen kommt (z.B. mit zwei seitlich versetzten Lichtquellen vor dem Kondensor 10; die Lichtquelle wird üblicherweise in die Abbildungslinse abgebildet).

Eine nicht in den Figuren dargestellte weitere Ausführungsform einer erfindungsgemäßen Vorrichtung mit bewegten Komponenten besteht darin, Beleuchtungselemente mit zufällig oder pseudozufällig strukturiertem Lichtkegel, z.B. solche wie die in Fig. 6 dargestellte Lichtquelle 12 mit Helligkeitsmuster, die beispielsweise wie in Fig. 7 dargestellt angeordnet werden, zu bewegen, z.B. durch Vibration der Befestigung und ggf. zusätzlich durch flexible Aufhängung der Beleuchtungselemente.

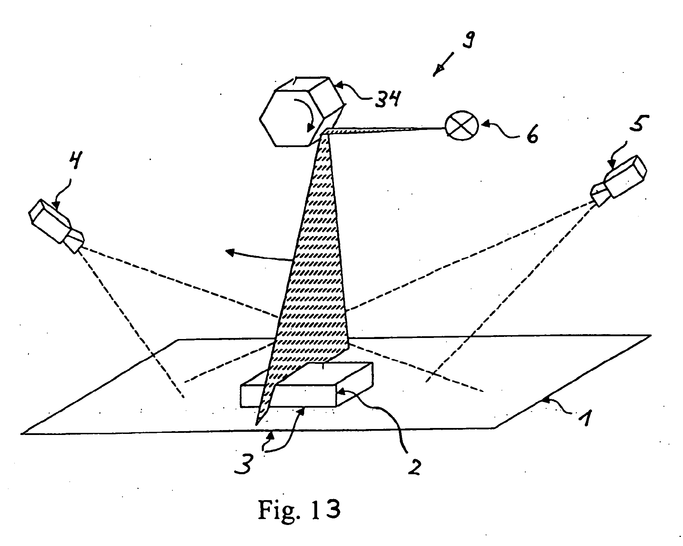

Die Fig. 13 zeigt eine Ausführungsform einer Vorrichtung entsprechend den Vorrichtungen aus den Fig. 1 und 2, wobei als Beleuchtungsquelle jedoch ein Scanner verwendet wird. Dabei wird das Licht einer Lichtquelle 6 bzw. eines Lichtschlitzes auf eine Ablenkeinheit 34 projiziert, die in Fig. 13 beispielsweise ein Dreh-Polygon ist, und von dort auf die Szene 3. Die Lichtquelle 6 ist hier beispielsweise eine LaserLichtquelle mit einer Zylinderlinse zur Strahlaufweitung (nicht gezeichnet), wie bei Laserscannern üblich. Die Lichtquelle 6 wird in zufälliger oder pseudozufälliger Weise helligkeitsmoduliert. Die Integrationszeit der Kameras 4, 5 und die Ablenkgeschwindigkeit werden so aufeinander abgestimmt, dass innerhalb eines Integrationsintervalls die Szene 3 im interessierenden Bereich überstrichen wird. Es werden je Kamera 4, 5 zwei Bildaufnahmen realisiert. Die Kameras 4, 5 brauchen nicht mit der Ablenkeinheit 34 abgestimmt zu sein. Dies ist ein Vorteil gegen der oben beschriebenen Lösung gemäß der US 6600168. Der das Zufallsmuster in der Helligkeitsmodulation erzeugende Zufallsgenerator braucht weder mit den Kameras 4, 5 noch mit der Ablenkeinheit 34 synchronisiert zu sein.

Das erfindungsgemäße Verfahren arbeitet beispielsweise mit Stereokameras 4, 5 und einer Streifenlichtprojektion mit einem Quasizufallsmuster, das mit einem unkalibrierten Beamer projiziert wird. Es werden je Kamera 4, 5 genau zwei unterschiedlich beleuchtete Bilder aufgenommen, anschließend wird eine pixelweise Quotientenbildung beider Bilder vorgenommen. Das resultierende Quotientenbild ist per se völlig unabhängig von den Oberflächeneigenschaften des Objekts sowie der Richtung der Oberflächen-Normalen: Die Bestimmung der korrespondierenden Punkte (das Hauptproblem bei Stereoauswertung) wird dadurch ganz wesentlich erleichtert.

Das spezielle Streifenmuster als Quasizufallsfolge ist dabei ein Schlüssel; dadurch wird eine zuverlässige Stereoauswertung mit nur zwei Bildaufnahmen realisiert; Bildserien, wie bei codiertem Licht erforderlich, entfallen. Durch die Quotientenbildung erreicht das System seine vergleichsweise bessere Unempfindlichkeit gegenüber verschiedenen Oberflächeneigenschaften wie lokale Neigung, Rauheit, Bedruckung etc. Es ist keinerlei mechanische Bewegung des Messsystems notwendig. Die Auflösung des Beamers ist unkritisch, er muss nicht so hoch auflösen wie die Kameras.

Zum Realisieren mit Farbe erfolgen vorzugsweise die erste und die zweite Beleuchtung mit unterschiedlichen Farben, vorzugsweise gleichzeitig, und die Bildaufnahme erfolgt mit Farbkameras, um die Farbkanäle zu trennen.

Zum Realisieren mit Polarisation erfolgen vorzugsweise die erste und die zweite Beleuchtung mit unterschiedlicher Polarisation, vorzugsweise gleichzeitig, und bei der Bildaufnahme werden die Kanäle durch Strahlteiler (z.B. Strahlteilerwürfel, halbdurchlässige Spiegel) und nachgeschaltete Polarisationsfilter getrennt.

Zum Trennen der beiden Beleuchtungen sind Farbe und Polarisation zwar möglich, werden aber nicht bevorzugt; Farbe wegen der oben zitierten Probleme bei Farbauswertung, Polarisation wegen möglicher betrachtungswinkelabhängiger Polarisationseffekte, insbesondere auf nichtmetallischen Oberflächen (in der Nähe des Brewster Winkels).

Die Fig. 17 veranschaulicht eine erfindungsgemäße Ausführungsform, bei der die Szene mit einem Zufalls- oder Pseudozufallsmuster beleuchtet wird, das im Wesentlichen in einer ersten räumlichen Dimension lokal moduliert und in der zweiten räumlichen Dimension im Wesentlichen nicht oder nur wenig moduliert ist, also im wesentlichen ein Streifenmuster projiziert wird, und der Vergleich der Modulationsmerkmal-Verhältnisse auf einander zugeordneten epipolaren Linien verschiedener Kameras durchgeführt wird, wobei die zweite räumliche Dimension des Zufalls-bzw. Pseudozufallsmusters nicht quer sondern schräg zu den epipolaren Linien ausgerichtet wird.

Dargestellt ist ein von einer Kamera aufgenommenes Bildfeld 36 einer Szene, in dem epipolare Linien 37 verlaufen. Diese sind parallel oder in einem Winkel zueinander angeordnet. Die Szene wird mit Projektionsstreifen beleuchtet. Wenn die Projektionsstreifen 38 quer, also senkrecht zu den epipolaren Linien 37 projiziert werden beträgt der Winkel δ zwischen 70° und 90°. Wenn die Projektionsstreifen 39 schräg zu den epipolaren Linien 37 projiziert werden beträgt der Winkel δ zwischen 30° und 70°. In Fällen, in denen die epipolaren Linien 37 nicht parallel verlaufen, gilt für diese Betrachtung eine mittlere Richtung der epipolaren Linien 37 in dem aktiv auszuwertenden Teil des von der Kamera aufgenommenen Bildfeldes 36, d.h. dem Teil, in dem sich die auszuwertende Szene bzw. das Objekt befindet.

Die schräge Projektion ermöglicht es, dass in die Auswertung der Bildinformation zum Erstellen des Abstandsbildes Zuordnungen von zueinander unterschiedlichen Werten einbezogen werden, die zu demselben Objektpunkt gehören, aber aus verschiedenen epipolaren Linien stammen, die benachbart oder nah zueinander angeordnet sind, und stabilisiert dadurch die Auswertung der Bildinformation zum Erstellen des Abstandsbildes.

### Bezugszeichenliste

- 1: Unterlage
- 2: Werkstück
- 3: Objekt
- 4: Kamera
- 5: Kamera
- 6: punktförmige Lichtquelle
- 7: Maske
- 8: Streifen
- 9: Projektionseinheit
- 10: Kondensor
- 11: Objektiv
- 12: Lichtquelle mit Helligkeitsmuster
- 13: Lichtquelle mit Helligkeitsmuster
- 14: Dreckeffekt
- 15: regelmäßiges Gitter
- 16: regelmäßiges Gitter
- 17: pseudozufälliges Gitter
- 18: pseudozufälliges Gitter
- 19: pseudozufälliges Strichmuster
- 20: pseudozufälliges Strichmuster
- 21: Gitter
- 22: Gitter
- 23: Gitterstruktur
- 24: Gitterstruktur
- 25: linienförmige Lichtquelle
- 26: linienförmige Lichtquelle
- 27: Reihe
- 28: Lichtquelle
- 29: bewegliche Maske
- 30: Pseudozufallsmuster
- 31: Partikelmaske
- 32: Behälter
- 33: Partikel
- 34: Ablenkeinheit
- 35: Glasscheibe
- 36: Bildfeld
- 37: epipolare Linien
- 38: Projektionsstreifen quer
- 39: Projektionsstreifen schräg
- δ: Winkel
- d: Abstand
- P: Periode
- Q: Objektpunkt

## Patentansprüche

1. Verfahren zum Erstellen eines Abstandsbildes einer Szene aus der Korrespondenz von Pixeln der Bilder einer ersten Kamera (4) und mindestens einer zweiten Kamera (5), die die Szene in Stereo-Anordnung aufnehmen,
**dadurch gekennzeichnet, dass**
- die Szene bei einer ersten Beleuchtung mit einem Zufalls- oder Pseudozufallsmuster beleuchtet wird, das hinsichtlich wenigstens eines Modulationsmerkmals in zumindest einer räumlichen Dimension als Zufallsfolge bzw. Pseudozufallsfolge ausgebildet ist,
- das Zufalls- bzw. Pseudozufallsmuster im Wesentlichen in der ersten räumlichen Dimension lokal moduliert und in der zweiten räumlichen Dimension im Wesentlichen nicht oder nur wenig moduliert ist,
- die zweite räumliche Dimension des Zufalls- bzw. Pseudozufallsmusters schräg zu den epipolaren Linien ausgerichtet wird,
- bei der ersten Beleuchtung ein erstes Bild von mindestens zwei Kameras (4, 5) aufgenommen wird,
- der Vergleich der Modulationsmerkmale auf einander zugeordneten epipolaren Linien verschiedener Kameras (4, 5) durchgeführt wird, und
- die Korrespondenz von Pixeln der Szene auf Basis eines Vergleichs der Modulationsmerkmale von Pixeln verschiedener Kameras (4, 5) bestimmt wird.

2. Verfahren nach Anspruch 1, **dadurch gekennzeichnet, dass**
- die Szene bei einer zweiten Beleuchtung beleuchtet wird, wobei ein zweites Bild mit der zweiten Beleuchtung von den mindestens zwei Kameras (4, 5) aufgenommen wird,
- für mindestens zwei Kameras (4, 5) aus dem ersten und dem zweiten von der jeweiligen Kamera (4, 5) aufgenommenen Bild pixelweise ein Verhältnis berechnet wird, bei dem ein in dem Pixel aufgenommener Wert des Modulationsmerkmals aus dem einen Bild in den Zähler und das Modulationsmerkmal aus dem anderen Bild in den Nenner des Verhältniswertes gesetzt wird, und
- die Korrespondenz von Pixeln der Szene auf Basis eines Vergleichs der Modulationsmerkmal-Verhältnisse von Pixeln verschiedener Kameras (4, 5) bestimmt wird.

3. Verfahren nach Anspruch 1 oder 2, **dadurch gekennzeichnet, dass** das Modulationsmerkmal die Helligkeit bzw. Intensität der Beleuchtung und das Modulationsmerkmal-Verhältnis ein Helligkeits- bzw. Intensitätsverhältnis ist.

4. Verfahren nach Anspruch 1 oder 2, **dadurch gekennzeichnet, dass** das Modulationsmerkmal ein Farbparameter der Beleuchtung und das Modulationsmerkmal-Verhältnis ein Farbwert-Verhältnis ist.

5. Verfahren nach einem der vorhergehenden Ansprüche, **dadurch gekennzeichnet, dass** die Zufalls- bzw. Pseudozufallsfolge eine binäre Folge, d.h. eine Folge mit zwei Zuständen des modulierten Merkmals, vorzugsweise eine Folge von Hell-Dunkel-Werten ist.

6. Verfahren nach einem der Ansprüche 2 bis 5, **dadurch gekennzeichnet, dass** bei der Bildung des Modulationsmerkmal-Verhältnisses zu den ins Verhältnis gesetzten Modulationsmerkmalen ein Offset-Wert hinzugerechnet oder abgezogen wird.

7. Verfahren nach einem der vorhergehenden Ansprüche, **dadurch gekennzeichnet, dass** das Zufalls- bzw. Pseudozufallsmuster im Wesentlichen in einer ersten räumlichen Dimension lokal moduliert und in der zweiten räumlichen Dimension im Wesentlichen nicht oder nur wenig moduliert ist.

8. Verfahren nach einem der Ansprüche 2 bis 7, **dadurch gekennzeichnet, dass** bei der zweiten Beleuchtung eine homogene Beleuchtung, ein ähnliches Zufalls- oder Pseudozufallsmuster wie bei der ersten Beleuchtung oder bevorzugt ein anderes Zufalls- oder Pseudozufallsmuster als bei der ersten Beleuchtung verwendet wird.

9. Verfahren nach einem der Ansprüche 2 bis 8, **dadurch gekennzeichnet, dass** die erste und die zweite Beleuchtung bei der Aufnahme des ersten und des zweiten Bildes zumindest näherungsweise aus jeweils dem gleichen Raumwinkel durchgeführt werden.

10. Verfahren nach einem der Ansprüche 2 bis 9, **dadurch gekennzeichnet, dass** der Vergleich der Modulationsmerkmal-Verhältnisse auf einander zugeordneten epipolaren Linien verschiedener Kameras (4, 5) durchgeführt wird.

11. Verfahren nach dem vorhergehenden Anspruch, **dadurch gekennzeichnet, dass** die Korrespondenz durch einen Vergleich der Werte von stückweiser, eindimensionaler, normierter Korrelation der Modulationsmerkmal-Verhältnisse entlang der epipolaren Linien hergestellt wird.

12. Verfahren nach den Ansprüchen 7 und 10, **dadurch gekennzeichnet, dass** das Zufalls- bzw. Pseudozufallsmuster im Wesentlichen entlang der epipolaren Linien moduliert ist.

13. Verfahren nach einem der Ansprüche 10 bis 12, insbesondere nach Anspruch 12, **dadurch gekennzeichnet, dass** in die Auswertung der Bildinformation zum Erstellen des Abstandsbildes Zuordnungen von zueinander unterschiedlichen Werten einbezogen werden, die zu demselben oder nahezu demselben Objektpunkt gehören, aber aus verschiedenen epipolaren Linien stammen, die benachbart oder nah zueinander angeordnet sind.

14. Verfahren nach einem der Ansprüche 2 bis 13, **dadurch gekennzeichnet, dass** die erste und die zweite Beleuchtung mit unterschiedlichen Farben erfolgt, vorzugsweise gleichzeitig, und Farbkameras eingesetzt werden.

15. Verfahren nach einem der Ansprüche 2 bis 14, **dadurch gekennzeichnet, dass** die erste und die zweite Beleuchtung mit unterschiedlicher Polarisation erfolgt und dass bei der Bildaufnahme die Trennung der Kanäle durch Strahlteiler und nachgeschaltete Polarisationsfilter geschieht.

16. Vorrichtung zum Erstellen eines Abstandsbildes einer Szene, umfassend mindestens zwei Kameras (4, 5) in Stereo-Anordnung, mindestens eine Bildauswerteeinheit zum Auswerten der Kamerabilder und mindestens eine Projektionseinheit (9) zum Beleuchten der Szene,
**dadurch gekennzeichnet, dass**
- mittels der Projektionseinheit eine erste Beleuchtung auf die Szene projizierbar ist, die als ein Zufalls- oder Pseudozufallsmuster ausgebildet ist, das hinsichtlich wenigstens eines Modulationsmerkmals in zumindest einer räumlichen Dimension als Zufallsfolge bzw. Pseudozufallsfolge ausgebildet ist,
- das Zufalls- bzw. Pseudozufallsmuster im Wesentlichen in der ersten räumlichen Dimension lokal moduliert und in der zweiten räumlichen Dimension im Wesentlichen nicht oder nur wenig moduliert ist,
- die zweite räumliche Dimension des Zufalls- bzw. Pseudozufallsmusters schräg zu den epipolaren Linien ausgerichtet ist,
- bei der ersten Beleuchtung ein erstes Bild von mindestens zwei Kameras (4, 5) aufnehmbar ist, und
- die Korrespondenz von Pixeln der Szene auf Basis eines Vergleichs der Modulationsmerkmale von Pixeln verschiedener Kameras (4, 5) bestimmbar ist.

17. Vorrichtung nach Anspruch 16, **dadurch gekennzeichnet, dass**
- mittels der Projektionseinheit (9) mindestens zwei verschiedene Beleuchtungen auf die Szene projizierbar sind, von denen mindestens eine Beleuchtung ein Zufalls- oder Pseudozufallsmuster ist, das hinsichtlich wenigstens eines Modulationsmerkmals in zumindest einer räumlichen Dimension als Zufallsfolge bzw. Pseudozufallsfolge ausgebildet ist,
- die Szene bei einer zweiten Beleuchtung beleuchtbar ist, wobei ein zweites Bild mit der zweiten Beleuchtung von den mindestens zwei Kameras (4, 5) aufnehmbar ist,
- mit der Bildauswerteeinheit für mindestens zwei Kameras (4, 5) aus dem ersten und dem zweiten von der jeweiligen Kamera (4, 5) aufgenommenen Bild pixelweise ein Verhältnis berechenbar ist, bei dem ein in dem Pixel aufgenommener Wert des Modulationsmerkmals aus dem einen Bild in den Zähler und das Modulationsmerkmal aus dem anderen Bild in den Nenner des Verhältniswertes gesetzt wird, und
- die Korrespondenz von Pixeln der Szene auf Basis eines Vergleichs der Modulationsmerkmal-Verhältnisse von Pixeln verschiedener Kameras (4, 5) bestimmbar ist.

18. Vorrichtung nach einem der Ansprüche 16 bis 17, **dadurch gekennzeichnet, dass** mindestens zwei Beleuchtungen mit einem Zufalls- oder Pseudozufallsmuster durchführbar sind.

19. Vorrichtung nach einem der Ansprüche 16 bis 18, **dadurch gekennzeichnet, dass** mindestens ein Zufalls- oder Pseudozufallsmuster ein Helligkeitsmuster ist.

20. Vorrichtung nach einem der Ansprüche 16 bis 19, **gekennzeichnet durch** eine Projektionseinheit (9) mit zwei überlagerten Gittern (21, 22), die zueinander einen Abstand (d) haben, wobei mindestens eines eine zufällige oder pseudozufällige Struktur aufweist, und eine Beleuchtung mit mindestens zwei Lichtquellen (25, 26), die **durch** die Gitter (21, 22) hindurchleuchten oder sie beleuchten können, und dabei unterschiedliche Muster ergeben.

21. Vorrichtung nach einem der Ansprüche 16 bis 19, **gekennzeichnet durch** eine Projektionseinheit (9) mit zwei überlagerten Gittern (15, 16, 17, 18, 19, 20), die zueinander einen Abstand haben, wobei bei mindestens einem die Phase und/oder die Frequenz des Gitters in pseudozufälliger Weise variiert, und eine Beleuchtung mit mindestens zwei Lichtquellen, die **durch** die Gitter hindurchleuchten oder sie beleuchten können, und dabei unterschiedliche Moirémuster ergeben.

22. Vorrichtung nach einem der Ansprüche 16 bis 19, **gekennzeichnet durch** eine Projektionseinheit (9) einer transparenten oder teiltransparenten Schicht im Strahlengang der Projektionseinheit (9), die eine zufällige oder pseudozufällige Struktur aufweist, und eine Beleuchtung mit mindestens zwei Lichtquellen, die **durch** die Struktur hindurchleuchten oder sie beleuchten können, und dabei unterschiedliche Muster ergeben.

23. Vorrichtung nach dem vorhergehenden Anspruch, **dadurch gekennzeichnet, dass** die transparente oder teiltransparente Schicht ein Körper mit einer leichten Oberflächenwelligkeit oder Oberflächenrauhigkeit ist, vorzugsweise ein dünne wellige Glasscheibe (35).

24. Vorrichtung nach einem der Ansprüche 16 bis 19, **gekennzeichnet durch** eine lokal unterschiedlich transparente Maske in Form eines Pseudozufallsmusters, das **durch** elektrische Ansteuerung veränderbar ist.

25. Vorrichtung nach einem der Ansprüche 16 bis 19 **gekennzeichnet durch** eine oder mehrere Projektionseinheiten (9), die jeweils mindestens zwei nahe beisammen liegende, näherungsweise punkt- oder linienförmige Lichtquellen umfassen, deren Lichtkegel unterschiedliche Helligkeitsmuster ausstrahlen.

26. Vorrichtung nach einem der Ansprüche 16 bis 19, **gekennzeichnet durch** eine Projektionseinheit (9) mit zwei zueinander bewegbaren, überlagerten Mustern, wobei mindestens eines eine pseudozufällige Struktur aufweist.

27. Vorrichtung nach einem der Ansprüche 16 bis 19, **gekennzeichnet durch** eine Projektionseinheit (9) mit zwei zueinander bewegbaren überlagerten Gittermustern, wobei bei mindestens einem die Phase und/oder die Frequenz in pseudozufälliger Weise variiert.

28. Vorrichtung nach einem der Ansprüche 16 bis 19, **gekennzeichnet durch** eine Projektionseinheit (9), die eine zufällige oder pseudozufällige Struktur aufweist, die rotatorisch oder translatorisch bewegt werden kann.

29. Vorrichtung nach einem der Ansprüche 16 bis 19, **gekennzeichnet durch** eine Projektionseinheit (9) mit einer Maske, die einen transparenten Behälter (32) umfasst, in dem sich stochastisch teiltransparente oder undurchsichtige Partikel (31) bewegen.

30. Vorrichtung nach einem der Ansprüche 16 bis 19, **gekennzeichnet durch** eine Projektionseinheit (9) mit mindestens einer näherungsweise punktförmigen oder linienförmigen Lichtquelle, deren Lichtkegel Helligkeitsmuster ausstrahlen mit festen Pseudozufälligkeitsmustern, wobei die Lichtquellen **durch** Vibration bewegbar sind.

31. Vorrichtung nach einem der Ansprüche 16 bis 19, **gekennzeichnet durch** einen über die Szene sich bewegenden Lichtschlitz, der in zufälliger oder pseudozufälliger Weise helligkeitsmoduliert ist.

32. Vorrichtung nach einem der Ansprüche 16 bis 31, **dadurch gekennzeichnet, dass** ein Zufalls- bzw. Pseudozufallsmuster auf die Szene projizierbar ist, das im Wesentlichen in einer ersten räumlichen Dimension lokal moduliert und in der zweiten räumlichen Dimension im Wesentlichen nicht oder nur wenig moduliert ist.

33. Vorrichtung nach Anspruch 32, **dadurch gekennzeichnet, dass** das Zufalls- bzw. Pseudozufallsmuster im Wesentlichen entlang der epipolaren Linien moduliert ist.

34. Anwendung eines Verfahrens oder einer Vorrichtung nach einem der vorhergehenden Ansprüche auf dem Gebiet der Montagekontrolle, Robotik, Messtechnik, Archäologie, Bekleidungsindustrie, Biometrie, Medizin oder des Reverse Engineering.

## Claims

1. Method for the creation of a range image of a scene from the correspondence of pixels of the images of a first camera (4) and at least one second camera (5) which record the scene in stereo arrangement,
**characterized in that**
- in a first illumination, the scene is illuminated with a random or pseudo random pattern which is designed, with regard to at least one modulation feature in at least one spatial dimension, as a random sequence or, respectively, pseudo random sequence;
- the random or, respectively, pseudo random pattern is essentially locally modulated in the first spatial dimension and essentially not or only slightly modulated in the second spatial dimension;
- the second spatial dimension of the random or, respectively, pseudo random pattern is aligned diagonally to the epipolar lines;
- in the first illumination, a first image is taken by at least two cameras (4, 5);
- the comparison of the modulation features is performed on allocated epipolar lines of different cameras (4, 5); and
- the correspondence of pixels of the scene is determined on the basis of a comparison of the modulation features of pixels from different cameras (4, 5).

2. Method according to claim 1, **characterized in that**
- in a second illumination, the scene is illuminated, wherein a second image with the second illumination is taken by the at least two cameras (4, 5);
- for at least two cameras (4, 5), a ratio is calculated pixel-wise from the first and the second image taken by the corresponding camera (4, 5), in which a modulation feature value of the pixel from the one image is placed in the numerator, and the modulation feature from the other image is placed in the denominator of the ratio value; and
- the correspondence of pixels of the scene is determined on the basis of a comparison of the modulation feature ratios of pixels from different cameras (4, 5).

3. Method according to claim 1 or 2, **characterized in that** the modulation feature is the brightness or, respectively, the intensity of the illumination and the modulation feature ratio is a brightness or, respectively, intensity ratio.

4. Method according to claim 1 or 2, **characterized in that** the modulation feature is a color parameter of the illumination and the modulation feature ratio is a color value ratio.

5. Method according to any one of the preceding claims, **characterized in that** the random or, respectively, pseudo random sequence is a binary sequence, i.e. a sequence with two conditions of the modulated feature, preferably a sequence of light/dark values.

6. Method according to any one of claims 2 to 5, **characterized in that** - in forming the modulation feature ratio - an offset value is added to or subtracted from the modulation features set into a ratio.

7. Method according to any one of the preceding claims, **characterized in that** the random or, respectively, pseudo random pattern is essentially locally modulated in a first spatial dimension and essentially not modulated or only slightly in the second spatial dimension.

8. Method according to any one of the claims 2 to 7, **characterized in that** - with the second illumination - a homogeneous illumination, a random or pseudo random pattern similar to the first illumination, or, preferably, a random or pseudo random pattern different from the first illumination are used.

9. Method according to any one of the claims 2 to 8, **characterized in that** the first and the second illumination taking the first and the second image are performed at least approximately from the same solid angle.

10. Method according to any one of the claims 2 to 9, **characterized in that** the modulation feature ratios are compared on epipolar lines allocated to each other from different cameras (4, 5).

11. Method according to the preceding claim, **characterized in that** correspondence is obtained by a comparison of the values of a piecewise, one-dimensional, standardized correlation of the modulation feature ratios along the epipolar lines.

12. Method according to the claims 7 and 10, **characterized in that** the random or, respectively, pseudo random pattern is essentially modulated along the epipolar lines.

13. Method according to any one of the claims 10 to 12, **characterized in that** - in the analysis of the image information for the creation of the range image - allocations of values different from each other are included which belong to the same or nearly the same object point but come from different epipolar lines which are neighboring or arranged closely to each other.

14. Method according to any one of the claims 2 to 13, **characterized in that** the first and the second illumination are provided with different colors, preferably simultaneously, and that color cameras are used.

15. Method according to any one of the claims 2 to 14, **characterized in that** the first and the second illumination are provided with a different polarization, and **in that** the channels, upon taking the image, are separated by beam splitters and downstream polarization filters.

16. Device for the creation of a range image of a scene, comprising at least two cameras (4, 5) in stereo arrangement, at least one image analysis unit for analyzing the camera pictures and at least one projection unit (9) for illumination of the scene,
**characterized in that**
- by means of the projection unit, a first illumination can be projected onto the scene, designed as a random or pseudo random pattern which is designed, with regard to at least one modulation feature in at least one spatial dimension, as a random sequence or, respectively, pseudo random sequence;
- the random or, respectively, pseudo random pattern is essentially locally modulated in the first spatial dimension and essentially not or only slightly modulated in the second spatial dimension;
- the second spatial dimension of the random or, respectively, pseudo random pattern is aligned diagonally to the epipolar lines;
- in the first illumination, a first image can be taken by at least two cameras (4, 5); and
- the correspondence of pixels of the scene is determined on the basis of a comparison of the modulation features of pixels from different cameras (4, 5).

17. Device according to claim 16, **characterized in that**
- by means of the projection unit (9), at least two different illuminations can be projected onto the scene, of which at least one illumination is a random or pseudo random pattern which is designed, with regard to at least one modulation feature in at least one spatial dimension, as a random sequence or, respectively, pseudo random sequence;
- in a second illumination, the scene can be illuminated wherein a second image with the second illumination can be taken by the at least two cameras (4, 5);
- for at least two cameras (4, 5), a ratio can be calculated pixel-wise with the image analysis unit from the first and the second image taken by the corresponding camera (4, 5), in which a modulation feature value of the pixel from the one image is placed in the numerator, and the modulation feature from the other image is placed in the denominator of the ratio value; and
- the correspondence of pixels of the scene can be determined on the basis of a comparison of the modulation feature ratios of pixels from different cameras (4, 5).

18. Device according to any one of the claims 16 to 17, **characterized in that** at least two illuminations can be performed with a random or pseudo random pattern.

19. Device according to any one of the claims 16 to 18, **characterized in that** at least one random or pseudo random pattern is a brightness pattern.

20. Device according to any one of the claims 16 to 19, **characterized by** a projection unit (9) with two superposed gratings (21, 22) which have a distance (d) to each other, wherein at least one has a random or pseudo random structure, and by an illumination with at least two light sources (25, 26) which shine through the gratings (21, 22) or can illuminate them and thereby provide different patterns.

21. Device according to any one of the claims 16 to 19, **characterized by** a projection unit (9) with two superposed gratings (15, 16, 17, 18, 19, 20) which have a distance to each other, wherein at least for one, the phase and/or the frequency of the grating varies in a pseudo random manner, and by an illumination with at least two light sources which shine through the gratings or can illuminate them and thereby provide different moiré patterns.

22. Device according to any one of the claims 16 to 19, **characterized by** a projection unit (9) with a transparent or partly transparent layer in the optical path of the projection unit (9), comprising a random or pseudo random structure, and by an illumination with at least two light sources which shine through the structure or can illuminate it and thereby provide different patterns.

23. Device according to the preceding claim, **characterized in that** the transparent or partly transparent layer is a body with a slight surface waviness or surface roughness, preferably a thin wavy pane of glass (35).

24. Device according to any one of the claims 16 to 19, **characterized by** a locally differently transparent mask in the form of a pseudo random pattern which can be changed through electrical control.

25. Device according to any one of the claims 16 to 19, **characterized by** one or a plurality of projection units (9), each comprising at least two closely neighboring, approximately point or line shaped light sources whose cones of light emit different brightness patterns.

26. Device according to any one of the claims 16 to 19, **characterized by** a projection unit (9) with two superposed patterns movable to each other, with at least one having a pseudo random structure.

27. Device according to any one of the claims 16 to 19, **characterized by** a projection unit (9) with two superposed patterns movable to each other, with at least one in which the phase and/or the frequency varies in a pseudo random manner.

28. Device according to any one of the claims 16 to 19, **characterized by** a projection unit (9) comprising a random or pseudo random structure which can be moved rotatorily or translatorily.

29. Device according to any one of the claims 16 to 19, **characterized by** a projection unit (9) with a mask which includes a transparent vessel (32) in which stochastically partially transparent or opaque particles (31) are moving.

30. Device according to any one of the claims 16 to 19, **characterized by** a projection unit (9) with at least one approximately point- or line-shaped light source whose cones of light emit brightness patterns with constant pseudo random patterns, with the light sources being movable by vibration.

31. Device according to any one of the claims 16 to 19, **characterized by** a slot of light moving over the scene, the brightness of this slot being modulated in a random or pseudo random manner.

32. Device according to any one of the claims 16 to 31, **characterized in that** a random or, respectively, pseudo random pattern is projectable on the scene, which is essentially locally modulated in a first spatial dimension and essentially not or only slightly modulated in the second spatial dimension.

33. Device according to claim 32, **characterized in that** the random or, respectively, pseudo random pattern is essentially modulated along the epipolar lines.

34. Application of a method or a device according to any one of the preceding claims in the field of assembly control, robotics, metrology, archaeology, textile industry, biometry, medicine or reverse engineering.

## Revendications

1. Procédé de création d'une image de distance d'une scène à partir de la correspondance de pixels des images d'une première caméra (4) et d'au moins une deuxième caméra (5) qui filment la scène en configuration stéréo,
**caractérisé en ce que**
- la scène est éclairée avec un premier éclairage présentant un motif aléatoire ou pseudo-aléatoire qui est réalisé sous la forme d'une séquence aléatoire ou pseudo-aléatoire en ce qui concerne au moins une caractéristique de modulation dans au moins une dimension spatiale,
- le motif aléatoire ou pseudo-aléatoire est essentiellement modulé localement dans la première dimension spatiale et essentiellement non modulé ou seulement légèrement modulé dans la deuxième dimension spatiale,
- la deuxième dimension spatiale du motif aléatoire ou pseudo-aléatoire est orientée obliquement par rapport aux lignes épipolaires,
- une première image est enregistrée par au moins deux caméras (4, 5) avec le premier éclairage,
- la comparaison des caractéristiques de modulation sur des lignes épipolaires mutuellement associées de différentes caméras (4, 5) est effectuée, et
- la correspondance de pixels de la scène est déterminée sur la base d'une comparaison des caractéristiques de modulation de pixels des différentes caméras (4, 5).

2. Procédé selon la revendication 1, **caractérisé en ce que**
- la scène est éclairée avec un deuxième éclairage, une deuxième image étant enregistrée par lesdites au moins deux caméras (4, 5) avec le deuxième éclairage,
- un rapport est calculé pixel par pixel pour au moins deux caméras (4, 5) à partir de la première et de la deuxième image enregistrée par la caméra respective (4, 5), dans lequel une valeur, enregistrée dans le pixel, de la caractéristique de modulation provenant d'une image est mise au numérateur et la caractéristique de modulation provenant de l'autre image au dénominateur du rapport, et
- la correspondance de pixels de la scène est déterminée sur la base d'une comparaison des rapports de caractéristiques de modulation de pixels des différentes caméras (4, 5).

3. Procédé selon la revendication 1 ou 2, **caractérisé en ce que** la caractéristique de modulation est la luminosité ou l'intensité de l'éclairage et le rapport de caractéristiques de modulation un rapport de luminosité ou d'intensité.

4. Procédé selon la revendication 1 ou 2, **caractérisé en ce que** la caractéristique de modulation est un paramètre de couleur de l'éclairage et le rapport de caractéristiques de modulation un rapport de valeurs de couleur.

5. Procédé selon une des revendications précédentes, **caractérisé en ce que** la séquence aléatoire ou pseudo-aléatoire est une suite binaire, c.-à-d. une suite de deux états de la caractéristique modulée, de préférence une suite de valeurs clarté/obscurité.

6. Procédé selon une des revendications 2 à 5, **caractérisé en ce qu'**une valeur de décalage est ajoutée ou retranchée aux caractéristiques de modulation mises en rapport lors de la formation du rapport de caractéristiques de modulation.

7. Procédé selon une des revendications précédentes, **caractérisé en ce que** le motif aléatoire ou pseudo-aléatoire est essentiellement modulé localement dans une première dimension spatiale et essentiellement non modulé ou seulement légèrement modulé dans la deuxième dimension spatiale.

8. Procédé selon une des revendications 2 à 7, **caractérisé en ce que** pour le deuxième éclairage, on utilise un éclairage homogène, un motif aléatoire ou pseudo-aléatoire analogue à celui du premier éclairage ou de préférence un autre motif aléatoire ou pseudo-aléatoire que celui du premier éclairage.

9. Procédé selon une des revendications 2 à 8, **caractérisé en ce que** le premier et le deuxième éclairage sont effectués chaque fois depuis au moins approximativement le même angle solide pour l'enregistrement de la première et de la deuxième image.

10. Procédé selon une des revendications 2 à 9, **caractérisé en ce que** la comparaison der rapports de caractéristiques de modulation est effectuée sur des lignes épipolaires mutuellement associées des différentes caméras (4, 5).

11. Procédé selon la revendication précédente, **caractérisé en ce que** la correspondance est réalisée par une comparaison des valeurs de corrélation unidimensionnelle normée par morceaux des rapports de caractéristiques de modulation le long des lignes épipolaires.

12. Procédé selon les revendications 7 et 10, **caractérisé en ce que** le motif aléatoire ou pseudo-aléatoire est essentiellement modulé le long des lignes épipolaires.

13. Procédé selon une des revendications 10 à 12, en particulier selon la revendication 12, **caractérisé en ce que** l'on intègre dans l'évaluation de l'information d'image pour créer l'image de distance des associations de valeurs différentes entre elles qui appartiennent au même ou à peu près au même point objet, mais proviennent de lignes épipolaires différentes qui sont voisines ou disposées à proximité les unes des autres.

14. Procédé selon une des revendications 2 à 13, **caractérisé en ce que** le premier et le deuxième éclairage sont effectués avec des couleurs différentes, de préférence en même temps, et que l'on utilise des caméras couleur.

15. Procédé selon une des revendications 2 à 14, **caractérisé en ce que** le premier et le deuxième éclairage sont effectués avec une polarisation différente et que lors de l'enregistrement d'image, la séparation des canaux est réalisée par des diviseurs de faisceau et des filtres de polarisation.

16. Dispositif de création d'une image de distance d'une scène, comprenant au moins deux caméras (4, 5) en configuration stéréo, au moins une unité d'évaluation d'images pour évaluer les images des caméras et au moins une unité de projection (9) pour éclairer la scène,
**caractérisé en ce que**
- l'unité de projection (9) permet de projeter sur la scène un premier éclairage qui est réalisé sous la forme d'un motif aléatoire ou pseudo-aléatoire qui est réalisé sous la forme d'une séquence aléatoire ou pseudo-aléatoire en ce qui concerne au moins une caractéristique de modulation dans au moins une dimension spatiale,
- le motif aléatoire ou pseudo-aléatoire est essentiellement modulé localement dans la première dimension spatiale et essentiellement non modulé ou seulement légèrement modulé dans la deuxième dimension spatiale,
- la deuxième dimension spatiale du motif aléatoire ou pseudo-aléatoire est orientée obliquement par rapport aux lignes épipolaires,
- une première image est enregistrée par au moins deux caméras (4, 5) avec le premier éclairage, et
- la correspondance de pixels de la scène peut être déterminée sur la base d'une comparaison des caractéristiques de modulation de pixels des différentes caméras (4, 5).

17. Dispositif selon la revendication 16, **caractérisé en ce que**
- au moins deux éclairages différents peuvent être projetés sur la scène au moyen de l'unité de projection (9), dont au moins un éclairage est un motif aléatoire ou pseudo-aléatoire qui est réalisé sous la forme d'une séquence aléatoire ou pseudo-aléatoire en ce qui concerne au moins une caractéristique de modulation dans au moins une dimension spatiale,
- la scène peut être éclairée avec un deuxième éclairage, une deuxième image pouvant être enregistrée par lesdites au moins deux caméras (4, 5) avec le deuxième éclairage,
- l'unité d'évaluation d'images permet de calculer un rapport pixel par pixel pour au moins deux caméras (4, 5) à partir de la première et de la deuxième image enregistrée par la caméra respective (4, 5), dans lequel une valeur, enregistrée dans le pixel, de la caractéristique de modulation provenant d'une image est mise au numérateur et la caractéristique de modulation provenant de l'autre image au dénominateur du rapport, et
- la correspondance de pixels de la scène peut être déterminée sur la base d'une comparaison des rapports de caractéristiques de modulation de pixels des différentes caméras (4, 5).

18. Dispositif selon une des revendications 16 à 17, **caractérisé en ce qu'**au moins deux éclairages peuvent être effectués avec un motif aléatoire ou pseudo-aléatoire.

19. Dispositif selon une des revendications 16 à 18, **caractérisé en ce qu'**au moins un motif aléatoire ou pseudo-aléatoire est un motif de luminosité.

20. Dispositif selon une des revendications 16 à 19, **caractérisé par** une unité de projection (9) avec deux grilles superposées (21, 22) qui ont une distance mutuelle (d), dont au moins une présente une structure aléatoire ou pseudo-aléatoire, et un éclairage avec au moins deux sources de lumière (25, 26) qui éclairent à travers les grilles (21, 22) ou peuvent les éclairer en créant des motifs différents.

21. Dispositif selon une des revendications 16 à 19, **caractérisé par** une unité de projection (9) avec deux grilles superposées (15, 16, 17, 18, 19, 20) qui ont une distance mutuelle, la phase et/ou la fréquence d'au moins une des grilles variant de manière pseudo-aléatoire, et un éclairage avec au moins deux sources de lumière qui éclairent à travers les grilles ou peuvent les éclairer en créant des motifs de moiré différents.

22. Dispositif selon une des revendications 16 à 19, **caractérisé par** une unité de projection (9) avec une couche transparente ou semi-transparente dans le chemin optique de l'unité de projection (9), qui présente une structure aléatoire ou pseudo-aléatoire, et un éclairage avec au moins deux sources de lumière qui éclairent à travers la structure ou peuvent l'éclairer en créant des motifs différents.

23. Dispositif selon la revendication précédente, **caractérisé en ce que** la couche transparente ou semi-transparente est un corps ayant une légère ondulation de surface ou rugosité de surface, de préférence une mince lame de verre ondulée (35).

24. Dispositif selon une des revendications 16 à 19, **caractérisé par** un masque de transparence localement différente sous la forme d'un motif pseudo-aléatoire qui est modifiable par une commande électrique.

25. Dispositif selon une des revendications 16 à 19 **caractérisé par** une ou plusieurs unités de projection (9) qui comprennent chaque fois au moins deux sources de lumière contiguës, approximativement ponctuelles ou linéaires, dont les faisceaux lumineux émettent des motifs de luminosité différents.

26. Dispositif selon une des revendications 16 à 19, **caractérisé par** une unité de projection (9) avec deux motifs superposés, mobiles l'un par rapport à l'autre, dont au moins un présente une structure pseudo-aléatoire.

27. Dispositif selon une des revendications 16 à 19, **caractérisé par** une unité de projection (9) avec deux motifs de grille superposés, mobiles l'un par rapport à l'autre, la phase et/ou la fréquence d'au moins un d'entre eux variant de manière pseudo-aléatoire.

28. Dispositif selon une des revendications 16 à 19, **caractérisé par** une unité de projection (9) qui présente une structure aléatoire ou pseudo-aléatoire qui est mobile en rotation ou en translation.

29. Dispositif selon une des revendications 16 à 19, **caractérisé par** une unité de projection (9) avec un masque qui comprend un récipient transparent (32) dans lequel des particules semi-transparentes ou opaques (31) se déplacent de manière stochastique.

30. Dispositif selon une des revendications 16 à 19, **caractérisé par** une unité de projection (9) avec au moins une source de lumière approximativement ponctuelle ou linéaire, dont les faisceaux lumineux émettent des motifs de luminosité avec des motifs pseudo-aléatoires fixes, les sources de lumière étant mobiles par vibration.

31. Dispositif selon une des revendications 16 à 19, **caractérisé par** une fente lumineuse en mouvement au-dessus de la scène, qui est modulée en luminosité de manière aléatoire ou pseudo-aléatoire.

32. Dispositif selon une des revendications 16 à 31, **caractérisé en ce qu'**un motif aléatoire ou pseudo-aléatoire peut être projeté sur la scène, qui est essentiellement modulé localement dans une première dimension spatiale et essentiellement non modulé ou seulement légèrement modulé dans la deuxième dimension spatiale.

33. Dispositif selon la revendication 32, **caractérisé en ce que** le motif aléatoire ou pseudo-aléatoire est modulé essentiellement le long des lignes épipolaires.

34. Utilisation d'un procédé ou d'un dispositif selon une des revendications précédentes dans les domaines du contrôle d'assemblage, de la robotique, de la métrologie, de l'archéologie, de l'industrie de l'habillement, de la biométrie, de la médecine ou du reverse engineering.
